(19) **Europäisches Patentamt / European Patent Office / Office européen des brevets**

(11) **EP 4 598 183 A1**

(12) **EUROPEAN PATENT APPLICATION**
published in accordance with Art. 153(4) EPC

(43) Date of publication:
06.08.2025  Bulletin 2025/32

(21) Application number: 23871080.0

(22) Date of filing: 28.09.2023

(51) International Patent Classification (IPC):
*H04W 72/04* (2023.01)

(52) Cooperative Patent Classification (CPC):
H04W 28/26; H04W 72/04; H04W 72/0453;
H04W 72/23

(86) International application number:
**PCT/CN2023/122867**

(87) International publication number:
**WO 2024/067856 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.09.2022  CN 202211224194
06.04.2023  CN 202310370394

(71) Applicant: **Vivo Mobile Communication Co., Ltd.
Dongguan, Guangdong 523863 (CN)**

(72) Inventors:
• **YANG, Yuming
Dongguan, Guangdong 523863 (CN)**
• **JI, Zichao
Dongguan, Guangdong 523863 (CN)**

(74) Representative: **Shieldmark
P.O. Box 90471
2509 LL The Hague (NL)**

(54) **RESOURCE INDICATION METHOD, TERMINAL, AND NETWORK SIDE DEVICE**

(57) This application discloses a resource indication method, a terminal, and a network-side device, pertaining to the communications field. The resource indication method of embodiments of this application includes: sending, by a first terminal, sidelink control information according to a numbering rule of sub-channels and/or resource groups, where the numbering rule of sub-channels and/or resource groups includes a mapping rule between sub-channels and interlaces, the sidelink control information includes resource indication information, and the resource indication information is used to indicate resources occupied and/or reserved by the first terminal.

A first terminal sends sidelink control information according to a numbering rule of sub-channels and/or resource groups, where the numbering rule of sub-channels and/or resource groups includes a mapping rule between sub-channels and interlaces, the sidelink control information includes resource indication information, and the resource indication information is used to indicate a resource occupied and/or reserved by the first terminal

201

FIG. 2

## Description

### CROSS-REFERENCE TO RELATED APPLICATIONS

This application claims priority to Chinese Patent Application No. 202310370394.9, filed with the China National Intellectual Property Administration on April 6, 2023 and entitled "RESOURCE INDICATION METHOD, TERMINAL, AND NETWORK-SIDE DEVICE", and claims priority to Chinese Patent Application No. 202211224194.4, filed with the China National Intellectual Property Administration on September 30, 2022 and entitled "RESOURCE INDICATION METHOD, TERMINAL, AND NETWORK-SIDE DEVICE" which is incorporated herein by reference in their entireties.

### TECHNICAL FIELD

This application pertains to the field of communications technologies, and specifically relates to a resource indication method, a terminal, and a network-side device.

### BACKGROUND

Sidelink (Sidelink, or translated as side link, sidelink, side-link, or the like) transmission is supported from long term evolution (Long Term Evolution, LTE) release 12, that is, terminals (User Equipment, UE) directly transmit data on the physical layer. LTE sidelink communication is performed based on broadcast. Although LTE sidelink can be used to support basic security communication of vehicle to everything (vehicle to everything, V2X), LTE sidelink is not applicable to other more advanced V2X services. A 5G NR (New Radio, new radio/new radio) system may support a more advanced sidelink transmission design, such as unicast and multicast or groupcast, so as to support more comprehensive service types.

In a further future communication system, an unlicensed band (unlicensed band) of sidelink may be used to supplement a licensed band (licensed band), to help an operator expand services. However, on the unlicensed band, it is necessary to meet an OCB (Occupied Channel Bandwidth, occupied bandwidth for signal sending on the unlicensed band) requirement, that is, each transmission needs to occupy 80% of an LBT (Listen before Talk, listen before talk) bandwidth. However, at present, there is still a lack of effective resource indication methods for unlicensed bands.

### SUMMARY

Embodiments of this application provide a resource indication method, a terminal, and a network-side device, which can resolve the problem of still lacking an effective resource indication mode for an unlicensed band.

According to a first aspect, a resource indication method is provided, where the method includes:
sending, by a first terminal, sidelink control information according to a numbering rule of sub-channels and/or resource groups, where the numbering rule of sub-channels and/or resource groups includes a mapping rule between sub-channels and interlaces, the sidelink control information includes resource indication information, and the resource indication information is used to indicate resources occupied and/or reserved by the first terminal.

According to a second aspect, a resource indication method is provided, where the method includes:

sending, by a network-side device, downlink control information to a first terminal according to a numbering rule of sub-channels and/or resource groups, where the numbering rule of sub-channels and/or resource groups includes a mapping rule between sub-channels and interlaces, the downlink control information includes resource indication information, and the resource indication information is used to indicate to the first terminal resources occupied and/or reserved for transmission; and/or
adding, by the first terminal, the resource indication information to sidelink control information and sending it to a second terminal.

According to a third aspect, a resource indication method is provided, where the method includes:

monitoring and/or receiving sidelink control information sent by a first terminal and/or downlink control information sent by a network-side device, where the sidelink control information and the downlink control information are generated according to a numbering rule of sub-channels and/or resource groups, the numbering rule of sub-channels and/or resource groups includes a mapping rule between sub-channels and interlaces, the sidelink control information includes resource indication information, and the resource indication information is used to indicate resources occupied and/or reserved by the first terminal; and
determining, based on the resource indication information, the resources occupied and/or reserved by the first terminal.

According to a fourth aspect, a resource indication apparatus is provided, where the apparatus includes: a first sending module, configured to, for a first terminal, send sidelink control information according to a numbering rule of sub-channels and/or resource groups, where the numbering rule of sub-channels and/or resource groups includes a mapping rule between sub-channels and interlaces, the sidelink control information includes resource indication information, and the resource indication information is used to indicate resources occupied and/or reserved by the first terminal.

According to a fifth aspect, a resource indication apparatus is provided, where the apparatus includes:

a second sending module, configured to, for a network-side device, send downlink control information to a first terminal according to a numbering rule of sub-channels and/or resource groups, where the numbering rule of sub-channels and/or resource groups includes a mapping rule between sub-channels and interlaces, the downlink control information includes resource indication information, and the resource indication information is used to indicate to the first terminal resources occupied and/or reserved for transmission; and
a third sending module, configured to, for the first terminal, add the resource indication information to sidelink control information and send it to a second terminal.

According to a sixth aspect, a resource indication apparatus is provided, where the apparatus includes:

a receiving module, configured to monitor and/or receive sidelink control information sent by a first terminal and/or downlink control information sent by a network-side device, where the sidelink control information and the downlink control information are generated according to a numbering rule of sub-channels and/or resource groups, the numbering rule of sub-channels and/or resource groups includes a mapping rule between sub-channels and interlaces, the sidelink control information includes resource indication information, and the resource indication information is used to indicate resources occupied and/or reserved by the first terminal; and
a determining module, configured to determine, based on the resource indication information, the resources occupied and/or reserved by the first terminal.

According to a seventh aspect, a terminal is provided, where the terminal includes a processor and a memory, and a program or instruction capable of running on the processor is stored in the memory. When the program or the instruction is executed by the processor, the steps of the method according to the first aspect or the third aspect are implemented.

According to an eighth aspect, a communication device is provided, including a processor and a memory, where a program or instruction capable of running on the processor are stored in the memory, and when the program or the instruction is executed by the processor, the steps of the method according to the second aspect are implemented, where the communication device is a network-side device or a terminal device.

According to a ninth aspect, a resource indication system is provided, including a first terminal and a communication device, where the first terminal can be configured to execute the steps of the resource indication method according to the first aspect and the third aspect, and the communication device can be configured to execute the steps of the resource indication method according to the second aspect.

According to a tenth aspect, a readable storage medium is provided, where t. The readable storage medium has stored thereon a program or instruction, and when the program or instruction is executed by a processor, the steps of the method according to the first aspect are implemented, or the steps of the method according to the second aspect are implemented, or the steps of the method according to the third aspect are implemented.

According to an eleventh aspect, a chip is provided, where the chip includes a processor and a communication interface, the communication interface is coupled to the processor, and the processor is configured to run a program or instruction to implement the method according to the first aspect or the method according to the second aspect.

According to a twelfth aspect, a computer program/program product is provided, where the computer program/program product is stored in a storage medium, and the computer program/program product is executed by at least one processor to implement the steps of the method according to the first aspect or the second aspect.

According to a thirteenth aspect, a communication apparatus/device is provided, where the apparatus/device is (configured to) configured to perform the steps of the method according to the first aspect or the second aspect.

According to the embodiments of this application, the first terminal sends the sidelink control information according to the numbering rule of sub-channels and/or resource groups, where the numbering rule of sub-channels and/or resource groups may include the mapping rule between sub-channels and interlaces, and the sidelink control information includes resource indication information, and the resource indication information is used to indicate resources occupied and/or reserved by the first terminal. According to the embodiments of this application, the mapping rule between sub-channels and interlaces is pre-configured, and then the mapping rule between sub-channels and interlaces is used for resource indication on an unlicensed band, so that the first terminal can indicate, according to the mapping rule between sub-channels and interlaces, the resource occupied or reserved by the first terminal, which can meet rules of OCB and the like on the unlicensed band, without changing an existing sidelink framework. This guarantees resource utilization as well as communication between a sending end and a receiving end in different scenarios, and resolves the problems of resource indication and resource allocation, which can adapt to potential diversified application scenarios and various needs in the future.

BRIEF DESCRIPTION OF DRAWINGS

FIG. 1 is a block diagram of a wireless communication system to which embodiments of this application are applicable;
FIG. 2 is a flowchart of a resource indication method according to an embodiment of this application;
FIG. 3 is a first schematic diagram of a relationship between sub-channels and interlaces according to an embodiment of this application;
FIG. 4 is a second schematic diagram of a relationship between sub-channels and interlaces according to an embodiment of this application;
FIG. 5 is a schematic diagram of resource indication for a capability-limited terminal;
FIG. 6 is a schematic diagram of a resource indication for a terminal with limited capability according to an embodiment of this application;
FIG. 7 is a flowchart of another resource indication method according to an embodiment of this application;
FIG. 8 is a flowchart of still another resource indication method according to an embodiment of this application;
FIG. 9A to FIG. 9E are schematic diagrams of resource indication according to an embodiment of this application;
FIG. 10 is a structural block diagram of a resource indication apparatus according to an embodiment of this application;
FIG. 11 is a structural block diagram of another resource indication apparatus according to an embodiment of this application;
FIG. 12 is a structural block diagram of still another resource indication apparatus according to an embodiment of this application;
FIG. 13 is a structural block diagram of a communication device according to an embodiment of this application;
FIG. 14 is a structural block diagram of a terminal device according to an embodiment of this application;
FIG. 15 is a structural block diagram of a network-side device according to an embodiment of this application; and
FIG. 16 is a structural block diagram of another network-side device according to an embodiment of this application.

DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

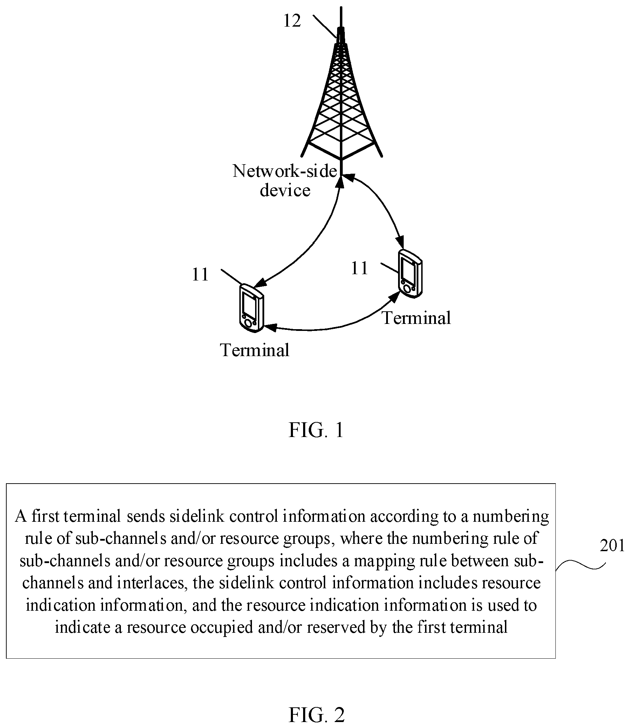

FIG. 1 is a block diagram of a wireless communication system applicable to an embodiment of this application. The wireless communication system includes a terminal 11 and a network-side device 12. The terminal 11 may be a mobile phone, a tablet computer (Tablet Personal Computer), a laptop computer (Laptop Computer), a personal digital assistant (personal digital assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following specifically describes the resource indication method provided in the embodiments of this application through specific embodiments and application scenarios thereof with reference to the accompanying drawings.

In a first aspect, referring to FIG. 2, FIG. 2 is an implementation flowchart of a resource indication method according to an embodiment of this application, and the method may include the following steps.

Step 201: A first terminal sends sidelink control information according to a numbering rule of sub-channels and/or resource groups, where the numbering rule of sub-channels and/or resource groups includes a mapping rule between sub-channels and interlaces, the sidelink control information includes resource indication information, and the resource indication information is used to indicate resources occupied and/or reserved by the first terminal.

In actual implementation, in order to be consistent with an NR deployment and maximize NR-based access on an unlicensed band, the unlicensed bands may be configured in frequency bands of 5GHz, 37GHz, and 60GHz. A large bandwidth (80MHz or 100MHz) on the unlicensed band may reduce implementation complexity of base stations and UEs. Since the unlicensed band is shared by a plurality of radio access technologies (RAT, Radio Access Technology), such as Wi-Fi, radar, and long term evolution-licensed-assisted access (long term evolution-licensed-assisted access, LTE-LAA), in some countries or regions, usage of the unlicensed bands needs to comply with regulations (rules), for example, rules such as LBT (listen before talk, listen before talk) and MCOT (maximum channel occupancy time, maximum channel occupancy time), to ensure that all devices may use resources fairly. When needing to send information, a transmission node needs to perform LBT first for energy detection (energy detection, ED) on surrounding nodes. When a detected power is lower than a threshold, a channel is considered to be idle (idle) and the transmission node can send data. Otherwise, the channel is considered to be busy and the transmission node cannot send data. The transmission node may be a base station, UE, a Wi-Fi AP, and the like. After the transmission node starts transmission, a channel occupancy time COT (Channel Occupancy Time, channel occupancy time) cannot exceed an MCOT. In addition, according to the requirement of OCB, on the unlicensed band, the transmission node needs to occupy at least 70% (60GHz) or 80% (5GHz) of a bandwidth of an entire band for each transmission.

The type (type) of LBT commonly used in NRU can be divided into Type1, Type2A, Type2B, and Type2C. Type1 LBT is a channel listening mechanism based on back-off (back-off). When the transmission node detects that a channel is busy, back-off is performed and listening continues until it is detected that the channel is idle. Type2C means that a sending node does not perform LBT, that is, no LBT or immediate transmission. Type2A and Type2B LBTs are one-shot LBT, that is, a node performs LBT once before transmission, and performs transmission if the channel is idle, and performs no transmission if the channel is busy. A difference is that: Type2A allows LBT within 25us, which is applicable to sharing of COT, and a gap (time interval) between two transmissions is greater than or equal to 25us; and Type2B allows performing LBT within 16us, which is applicable to sharing of COT, and the gap between two transmissions is equal to 16us. In addition, there is Type2 LBT, which is applicable to LAA/eLAA/FeLAA. For sharing of COT, when the gap between two transmissions is greater than or equal to 25us, an eNB and UE can use Type 2 LBT. In addition, in frequency range 2-2, the types of LBT are Type1, Type2, and Type3. Type1 is a channel listening mechanism based on back-off, Type2 is one-shot LBT and allows performing 5us LBT within 8us, and Type3 allows performing no LBT.

At present, in sidelink, the first terminal may merely send one SCI (Sidelink Control information, sidelink control information) on a resource in which the transmission is located, and a resource indication field carried by SCI may indicate a resource of this transmission in a unit of sub-channel (sub-channel), where the sub-channel may include one or more interlaces. However, during transmission on the unlicensed band, an access unit for channels such as PSSCH (Physical Side Link Shared Channel, physical sidelink shared channel) is RB set, which needs to meet the OCB requirements; therefore interlace (interlace) is introduced to meet the rules for the unlicensed band. Specifically, with the interlace being introduced, the unlicensed band can be fully utilized, and OCB regulations can be met. The interlace structure is used for resource allocation, and one interlace is formed by an integer number of resource blocks (RB, Resource Block) evenly distributed on the system bandwidth. Interlace is used as a basic unit for resource indication, and a resource allocated to each terminal is at least one interlace. On the unlicensed band, the terminal needs to perform LBT first, and then perform transmission only after the LBT is successful. The unit of LBT is RB set (resource group), specifically, one LBT usually occupies a bandwidth of 20MHz, and a carrier bandwidth of an entire unlicensed band in sidelink is divided into multiple RB sets based on LBT, for example, a bandwidth of a BWP (Bandwidth Part, bandwidth part) is 40MHz, 60MHz, 80MHz, or the like. If the BWP is 40MHz, there may be 2 LBTs (or 2 RB sets); if the BWP is 60MHz, there may be 3 LBTs (or 3 RB sets); and if the BWP is 80MHz, there may be 4 LBTs (or 4 RB sets). Each RB set is formed by a plurality of interlaces. To keep an existing framework of sidelink as much as possible for resource selection, resource indication, and resource exclusion on the unlicensed band, this embodiment of this application describes a relationship between sub-channels and interlaces of RB sets.

In this embodiment of this application, the relationship between sub-channels and interlaces can be implemented through a numbering rule of sub-channels and/or RB sets, where the numbering rule of sub-channels and/or RB sets may include a mapping rule between sub-channels and interlaces. Specifically, when the first terminal communicates with another terminal, such as a second terminal, the first terminal indicates, in a unit of sub-channel, a resource that needs to be occupied or reserved, and then sends SCI to the second terminal according to the numbering rule of sub-channels and/or RB sets, where the SCI includes resource indication information (FRIV, Frequency reservation indicator value), and the resource indication information is used to indicate the resources occupied and/or reserved by the first terminal. After receiving the resource indication information, the second terminal can determine, based on the resource indication information, the resource occupied or reserved by the first terminal. The resource occupied by the first terminal is a resource used for transmitting a first object in a slot (slot) in which the SCI is sent, and may also be described as a resource used for transmission or sending.

Specifically, the resource indication information is used to indicate a resource occupied for the first object by the first terminal on the unlicensed band, and the resource may include a frequency domain resource and a time domain resource, where the first object includes at least one of the following:

    PSCCH (Physical Sidelink Control Channel, physical sidelink control channel);
    PSSCH (Physical Sidelink Shared Channel, physical sidelink shared channel);
    PSFCH (Physical Sidelink Feedback Channel, physical sidelink feedback channel);
    SSB (Synchronization Signal, synchronization signal block); or the like.

It can be learned from the above step 201 that in this embodiment of this application, the first terminal sends the sidelink control information according to the numbering rule of sub-channels and/or resource groups, where the numbering rule of sub-channels and/or resource groups includes the mapping rule between sub-channels and interlaces, the sidelink control information includes resource indication information, and the resource indication information is used to indicate the resources occupied and/or reserved by the first terminal. According to the embodiments of this application, the mapping rule between sub-channels and interlaces is pre-configured, and then the mapping rule between sub-channels and interlaces is used for resource indication on an unlicensed band, so that the first terminal can indicate, according to the mapping rule between sub-channels and interlaces, the resource occupied or reserved by the first terminal, which can meet rules of OCB and the like on the unlicensed band, without changing an existing sidelink framework. This guarantees resource utilization as well as communication between a sending end and a receiving end in different scenarios, and resolves the problems of resource indication and resource allocation, which can adapt to potential diversified application scenarios and various needs in the future.

In this embodiment, the resource group may be an RB set, a channel, a PRB set, or the like.

As an optional embodiment, the numbering rule of sub-channels and/or resource groups satisfies at least one of the following:

    the sub-channel includes one interlace;
    or,

the sub-channel includes K interlaces, and the resource group includes M interlaces, where K and M are integers, optionally, K is a divisor of M, or K is not a divisor of M.

In the unlicensed band (SLU) of sidelink, a size of the sub-channel may be fixed as one interlace, or may be configured, for example, configured as the sub-channel being equal to K interlaces. In this case, the size of the sub-channel may change with a configured value of K, which makes the configuration more flexible.

Specifically, when the sub-channel is formed by K interlaces, and the RB set includes M interlaces in this case, optionally, K may be a divisor of M (or M is a multiple of K), or K may not be a divisor of M.

As an optional embodiment, when K is not a divisor of M, and a remainder obtained through modulo operation on M and K is m, m is an integer, where the numbering rule of sub-channels and/or resource groups satisfies at least one of the following:

sub-channels in the resource group are numbered from the (m+1)-th interlace; or
the sub-channels in the resource group are numbered from the 1st interlace.

In a case that the configured K is not a divisor of M, it is assumed that the remainder obtained through modulo operation on M and K is m, that is, mod (M, K) = m, then the numbering rule of sub-channels and/or RB sets satisfies at least one of the following:

item A-1: the starting sub-channel is numbered from the (m+1)-th interlace;
item A-2: the starting sub-channel is numbered from the 1st interlace;
in addition, remaining m interlaces may be processed as follows:

item A-3: the remaining m interlaces are not used for transmission;
item A-4: the remaining m interlaces form one sub-channel;
item A-5: the remaining m interlaces are all configured as guard bands (guard band); or
item A-6: the remaining m interlaces are configured to be in adjacent frequency domain of the guard band.

The unlicensed band includes a corresponding second object, and the second object may include at least one of the following: a carrier, a bandwidth part (bandwidth part, BWP), a resource pool (resource pool), a virtual resource pool, a virtual bandwidth part, or a range of resources that is able to be indicated.

In this embodiment of this application, when the sub-channel is equal to K interlaces, and the RB set or the second object is formed by M interlaces in this case, it may happen that K is not divisible by M. In this case, it is necessary to define how to handle remaining interlaces. For example, in this case, the starting sub-channel may be numbered from interlace 0 (the 1st interlace), that is, m interlaces at the highest frequency domain positions are left empty, that is, the interlaces may not be used for transmission and/or reception. In addition, in this case, the starting sub-channel may be numbered from interlace m (the (m+1)-th interlace), and then m interlaces at the lowest positions may be left empty. Alternatively, the interlaces are configured as guard bands, or are configured to be in adjacent frequency domain of the guard band, so as to better isolate the bandwidth. In addition, the extra m interlaces may alternatively be compiled into one special sub-channel, so that the terminal can still use these interlaces for transmission.

As an optional embodiment, the numbering rule of sub-channels and/or resource groups includes at least one of the following:

item B-1: On the second object, the sub-channel indexes of the sub-channels start from 0 and increase in ascending order or descending order in frequency domain;
item B-2: On the second object, the sub-channel indexes of the sub-channels start from a first starting sequence number and increase in ascending order or descending order in frequency domain. The first starting sequence number is configured or pre-configured by the network-side device or determined by the terminal. For example, the terminal may number the sub-channels in the resource pool based on the first starting sequence number indicated to the terminal. In this case, the starting sub-channel of the resource pool is the first starting sequence number, but not 0;
item B-3: On at least part of resource groups, the sub-channel indexes of the sub-channels start from 0 and increase in ascending order or descending order in frequency domain. For example, indexes of sub-channels start from 0 on each resource group, or start from 0 from the 2nd resource group;
item B-4: On at least part of resource groups, the sub-channel indexes of the sub-channels start from the first starting sequence number and increase in ascending order or descending order in frequency domain;
item B-5: On at least part of the resource groups, the sub-channel indexes of the sub-channels start from an index of an interlace at a lowest or highest frequency domain position on the resource group, and increase in ascending order or descending order in frequency domain;

item B-6: On the second object, resource group indexes of the resource groups start from 0 and increase in ascending order or descending order in frequency domain; or

item B-7: On the second object, the resource group indexes of the resource groups start from a second starting sequence number and increase in ascending order or descending order in frequency domain; where the second starting sequence number is configured or pre-configured by the network-side device or determined by the terminal. For example, the terminal may determine an index of an RB set in the resource pool based on the second starting sequence number indicated to the terminal, so as to understand a received resource indication or perform resource indication by itself.

In this case, an interlace corresponding to the sub-channel may be an interlace with an index same as the sub-channel index, or an interlace with one offset value added to the index, or an interlace with a same order in frequency domain, or the like. For details, refer to the mapping rule between sub-channels and interlaces.

In this embodiment of this application, during numbering of sub-channels and RB sets, a starting point of a sub-channel index (sub-channel index) of a sub-channel on the second object may be different from a starting point of an interlace index (interlace index) of an interlace, or the starting point of the sub-channel index may be the same as the starting point of the interlace index of the interlace on the second object.

Specifically, during numbering of the sub-channels, the sub-channel indexes are numbered on the second object, or are numbered on part of resource groups, where the sub-channel index may start from the first starting sequence number, or start from 0 and increase in ascending order or descending order in frequency domain. During numbering of RB sets, the interlace indexes are numbered on the second object, where the interlace indexes may start from the second starting sequence number, or start from 0 and increase in ascending order or descending order in frequency domain.

In this embodiment of this application, when the sub-channels are numbered within the RB set, P resources indicated by the FRIV are located in a same RB set (in this case, for one FRIV, only resources in a current RB set can be reserved to reduce overheads, which is more in line with the purpose of independent numbering of sub-channels). In a case that the sub-channels are numbered within the RB set, and the FRIV is sent in each RB set in which the PSSCH is located, the first indication information includes a first RB set indicator, and the first RB set indicator indicates an identifier (an index or a position/gap relative to a current RB set) of an RB set in which the last P-1 resources of the FRIV are located.

Specifically, in a case that one sub-channel is equal to one interlace, or is part of interlaces within one RB set:

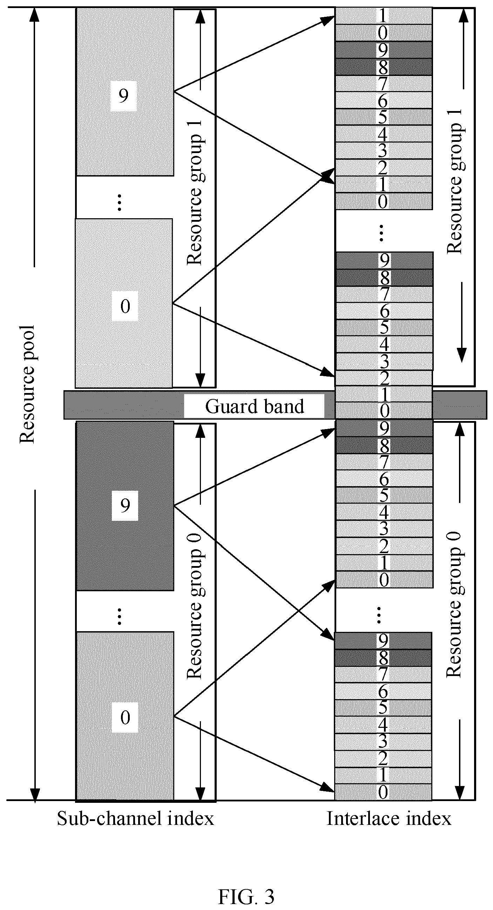

1. Sub-channel index = interlace index (in this case, sub-channels are numbered independently in each RB set); or
2. Sub-channel index = RB set index * interlace number + interlace index (in this case, sub-channels are numbered in the resource pool, which is assumed to start from 0). For example, refer to FIG. 3. FIG. 3 is one of schematic diagrams of a relationship between sub-channels and interlaces according to an embodiment of the present invention. In the figure, two RB sets are included, namely, RB set 0 and RB set 1, where each RB set includes 10 interlaces. In the 1st RB set (RB set 0), a sub-channel index may be the same as an interlace index of RB set 0. For example, in FIG. 3, sub-channel index 0 corresponds to interlace indexes 0 in RB set 0, ..., and sub-channel index 9 corresponds to interlace indexes 9 in RB set 0. Then, a sub-channel index in the 2nd RB set (that is, RB set 1) is numbered by adding an interlace quantity of RB set 0 (the number of interlaces here is 10). For example, in FIG. 3, sub-channel index 10 corresponds to interlace indexes 2 in RB set 1, ..., and sub-channel index 19 corresponds to interlace indexes 1 in RB set 0.

In a case that 1 sub-channel is equal to K interlaces or part of interlaces in one RB set:

$$\text{Sub-channel index} = \text{interlace } (K * \text{index} + 1) \text{ to interlace } (K * (\text{index} + 1)).$$

As an optional embodiment, the mapping rule between sub-channels and interlaces includes at least one of the following:

item C-1: The sub-channel index number of the sub-channel is the same as interlace indexes of interlaces in each corresponding resource group. That is, the sub-channel includes interlaces with the same sub-channel index, or resources with a same sub-channel index in the resource group. For example, sub-channel 0 may be mapped to interlaces with index 0, or interlaces with index 0 may be mapped to sub-channel 0. Further, when the resource indicated by the terminal is sub-channel 0, an actual physical resource position of the resource is interlace 0;

item C-2: The sub-channel index number of the sub-channel increases accordingly with an increase of the resource group identifier of each corresponding resource group and the interlace index of the interlace of the resource group. For example, in RB set 0, the resource with sub-channel index 1 may be mapped to interlace 1. However, with the increase of frequency domain, the sub-channel index may also increase. In this case, it is assumed that each RB set contains 5 sub-channels, in RB set 1, the resource of interlace 1 may be mapped to sub-channel 5 or corresponding to sub-channel 5;

item C-3: The sub-channel includes interlaces with a same index order as the sub-channel in the resource group. For example, a resource of the 1st sub-channel in a resource group may be mapped to a resource of the 1st interlaces, because a starting interlace index of the resource group may be different from a starting sub-channel index;

item C-4: The sub-channel includes interlaces whose indexes are deviated from the sub-channel index by N in the resource group, where N is a total number of sub-channels included in a resource group that is higher or lower in frequency domain than the resource group;

item C-5: In the 1st resource group, the sub-channel indexes of the sub-channels are the same as the interlace indexes of the interlaces of the corresponding 1st resource group; or

item C-6: In the 1st resource group, the sub-channel indexes of the sub-channels are numbered sequentially starting from 0. The order may be a frequency domain order, for example, from low to high in frequency domain or from high to low in frequency domain.

Optionally, the numbering of the sub-channel and/or the RB set may be predefined by a protocol or determined according to the configuration and/or pre-configuration for the second object, and the resource group identifier of the RB set may be predefined by the protocol, pre-configured or configured by the network-side device, and/or determined by the first terminal, which does not need to be limited in the embodiments of this application.

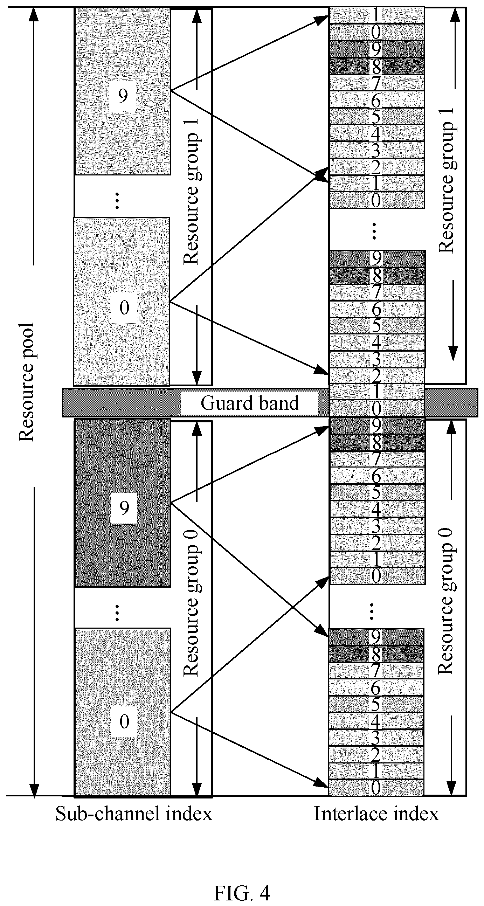

For example, refer to FIG. 4. FIG. 4 is a schematic diagram of a relationship between sub-channel and interlaces according to an embodiment of the present invention. In the figure, two RB sets are included, namely, RB set 0 and RB set 1, where each RB set includes 10 interlaces.

For item C-1, refer to FIG. 4. In RB set 0, a sub-channel includes interlaces with a same sub-channel index in RB set 0, for example, sub-channel index 0 corresponds to interlace indexes 0 in RB set 0, ..., and sub-channel index 9 corresponds to interlace indexes 9 in RB set 0.

For item C-2, a sub-channel includes interlaces whose indexes are deviated from the sub-channel index by one offset value in the resource group, where the offset value is an integer, for example, the offset value may be 2.

For item C-3, refer to FIG. 4. In RB set 1, a sub-channel includes interlaces in a same order as the sub-channel index in RB set 1, for example, sub-channel index 0 corresponds to interlace indexes 2 in RB set 1, ..., and sub-channel index 9 corresponds to interlace indexes 1 in RB set 1.

For item C-4, a sub-channel includes interlaces with a same index as the sub-channel index in the RB set, for example, including all indexes 0, all indexes 1, or the like.

For item C-5, in the 1st RB set, a sub-channel index of a sub-channel is the same as interlace indexes of interlaces in the corresponding 1st RB set, for example, the indexes are all 1, 2, or the like.

For item C-6, in the 1st RB set, sub-channel indexes of sub-channels start from 0 and are numbered sequentially, for example, 0, 1, 2, ..., and 9.

As an optional embodiment, a mapping rule of sub-channels and interlaces in a first resource group is the same as a mapping rule of sub-channels and interlaces in a lowest or highest resource group, and the first resource group is a resource group other than the lowest or highest resource group.

It can be understood that the mapping rule between sub-channels and interlaces includes:

The mapping rule between sub-channels and interlaces for the first resource group in the resource pool or other second objects is the same, and both are equal to a mapping rule between sub-channels in the lowest RB set and the interlaces. In this case, the first resource group is all RB sets other than the lowest RB set on the second object. For example, in one resource pool, a sub-channel index on the lowest RB set starts from 0, and the lowest PRB on the RB set belongs to interlace 0, then all PRBs belonging to interlace 0 on this RB set belong to or are mapped to sub-channel 0; all PRBs belonging to interlace 1 belong to or are mapped to sub-channel 1, and so on. Then, in RB sets such as RB set 1 with a higher frequency domain position, PRBs belonging to interlace 0 also belong to or are mapped to sub-channel 0 in RB set 1, PRBs belonging to interlace 1 all belong to or are mapped to sub-channel 1 in RB set 1, and so on. For another example, in one resource pool, a sub-channel index on the lowest RB set starts from 0, and PRBs belonging to interlace 2 and interlace 3 on this RB set belong to or are mapped to sub-channel 0, and PRBs belonging to interlace 4 and interlace 5 belong to or are mapped to sub-channel 1. Because there are only 10 interlaces in the resource pool, PRBs belonging to interlace 0 and interlace 1 belong to or are mapped to sub-channel 5, and so on, which is repeated cyclically. Then, in this case, in RB sets such as RB set 1 with a higher frequency domain position, PRBs belonging to interlace 2 and interlace 3 in RB set 1 belong to or are mapped to sub-channel 0 in RB set 1, PRBs belonging to interlace 4 and interlace 5 belong to or are mapped to sub-channel 1 in RB set 1, PRBs belonging to interlace 0 and interlace 1 belong to or are mapped to sub-channel 5, and so on, which is repeated cyclically. It can be learned that this can also be described as the mapping rule of sub-channels and interlace is the same for all resource groups. For example, sub-channel 0 in each resource group corresponds to interlace 0 and interlace 1 in this resource group.

As an optional embodiment, the sidelink control information includes at least one of the following:

item D-1: a starting position of a sub-channel in resource indication information in the sidelink control information is determined according to a configuration and/or pre-configuration of a second object;

item D-2: the resource indication information in the sidelink control information is determined based on the total number of sub-channels, where the total number of sub-channels is determined according to the configuration and/or pre-configuration of the second object;

item D-3: the resource indication information in the sidelink control information is determined based on a starting position of a resource group, where the starting position of the resource group is determined according to the configuration and/or pre-configuration of the second object; or

item D-4: the resource indication information in the sidelink control information is determined based on the total number of resource groups, where the total number of resource groups is predefined by a protocol or configured or pre-configured for the second object.

The configuration and/or pre-configuration of the second object includes at least one of the following: a first starting sequence number, a second starting sequence number, a starting position of the sub-channel, the total number of sub-channels, a starting position of the resource group, or a total number of resource groups.

As an optional example of this application, the configuration and/or pre-configuration of the second object includes at least one of the following:

(1) A first starting sequence number (which is, for example, 2) and a second starting sequence number (which is, for example, 3). For example, a starting sequence number of the 1st sub-channel on the resource pool may be a first starting sequence number. A starting sequence number of the 1st RB set in the resource pool may be the second starting sequence number.

(2) A starting position on a band, such as a specific physical PRB, a start sub-channel (a starting position of sub-channel), a start RB set (a starting position of resource group) and/or an RB set index (a resource group identifier) and/or an interlace index (interlace index), that is, the terminal is configured with one start sub-channel. The start sub-channel is one global position, and the terminal may perform resource indication based on the start sub-channel, facilitating understanding by other terminals.

(2-1) For example, the starting PRB indicates a starting position of a resource pool (a relative position relative to a starting position of a BWP).

(2-2) Optionally, the sub-channel start index is a starting position of the 1st sub-channel in the resource pool.

(2-3) Optionally, the RB start index is a starting position of the 1st RB set in the resource pool.

(2-4) Optionally, the RB set index + interlace index indicates a starting position of the resource pool.

(3) Size of the first object, that is, a carrier/BWP/resource pool/frequency domain resource range able to be indicated/virtual resource pool/virtual BWP, for example, sub-channel number (the total number of sub-channels) or RB set number (the total number of sub-channels) (this helps the terminal to perform FRIV coding based on this parameter).

(3-1) The size of the first object, that is, a carrier/BWP/resource pool/frequency domain resource range able to be indicated/virtual resource pool/virtual BWP, indicates an actually configured size, for example, a resource pool size indicated by an RRC (Radio Resource Control, radio resource control) parameter in R16.

(3-2) The size of the first object, that is, a carrier/BWP/resource pool/frequency domain resource range able to be indicated/virtual resource pool/virtual BWP, indicates one assistance parameter configured/pre-configured by the network for the terminal, where the parameter indicates that during indication of frequency domain resources by using SCI, the terminal needs to calculate the FRIV based on the frequency domain range indicated by this parameter, instead of a frequency domain range supported by the terminal itself.

In a business scenario, the terminal may be a capability-limited terminal. Specifically, the capability-limited terminal is a terminal whose hardware or software capability only supports a specific bandwidth upper limit or a terminal with other capabilities such as a demodulation upper limit. For example, the terminal may be a terminal supporting only a bandwidth of 20MHz. In this case, if the capability-limited terminal is configured with a frequency band or resource pool with a larger bandwidth (for example, 80MHz), the terminal can merely perform detection and demodulation on 20MHz, but cannot perform detection and demodulation on a bandwidth other than 20MHz in 80MHz. In this case, a scenario to be considered is that in a larger bandwidth frequency band or resource pool, if the capability-limited terminal needs to be supported to communicate with other terminals, it is necessary to ensure that understanding of the capability-limited terminal is consistent with that of other terminals in terms of resource indication and resource reservation; otherwise, communication-related problems may be caused between the capability-limited terminal and other terminals.

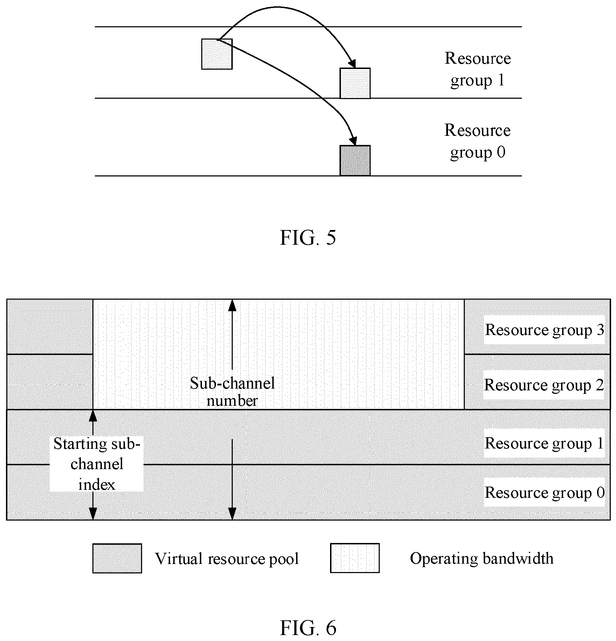

Refer to FIG. 5, assuming that the terminal A is a capability-limited terminal, in a case that the terminal A indicates resources occupied or reserved by itself, if sub-channels are numbered based on a bandwidth supported by terminal A, for example, an RB set on the upper part of FIG. 5, resources reserved by the terminal A are sub-channels 0 to 5, which are resource blocks of RB set 1 in FIG. 5 from the perspective of terminal A. However, for other terminals, if other terminals support all the bandwidths in FIG. 5, that is, bandwidths of two RB sets, RB set 0 and RB set 1, after detecting the resource indication of terminal A, other terminals may understand the reserved resources to be resource blocks of RB set 0, leading to a communication-related problem between the terminal A and other terminals.

In view of the problem for the capability-limited terminal, in the embodiments of this application, the following methods can be used:

In an optional manner, uniform starting points of sub-channels and/or interlaces are used during numbering, so that all terminals configured on the second object (such as carrier /BWP/resource pool) consider that the sub-channels and interlaces have the same starting point. In this case, regardless of which frequency the terminal works at or whether its capability is limited, the indicated sub-channel and interlace are unique, and there may be no problem of different understanding on the resource position in this case. As shown in FIG. 6, the sub-channel index and RB set are both numbered based on virtual resource pool (virtual resource pool) numbers. Sub-channel number (sub-channel number) means configuring the entire frequency domain, operation bandwidth (operation bandwidth) means a bandwidth supported by the terminal in the entire frequency domain, and start sub-channel index (start sub-channel index) is a sub-channel index of the 1st sub-channel of the bandwidth supported by the terminal. For the capability-limited terminal, although it only supports fewer bandwidths, the network-side device may indicate one start sub-channel index and sub-channel number to the terminal, so that the terminal can know a position of the second object, in which the terminal is located, in the entire sub-channel and interlace number frequency domain range, and the number of sub-channels and interlaces, which facilitates resource indication for the terminal. For example, as shown in FIG. 5, a start sub-channel being 10 and an entire frequency domain range being 20 may be configured/indicated for terminal A; then, when the terminal A indicates reserved resource blocks of RB set 1, the indicated sub-channels may be sub-channel 10 to sub-channel 15, instead of sub-channel 0 to sub-channel 5.

In another optional manner, each sub-channel and interlace are numbered independently on the RB set, and the terminal needs to carry an RB set identifier during resource indication. In this case, the RB set index (resource group identifier) is unique, so that the terminal A and other terminals may not have different understanding on the resource position.

As an optional embodiment, the sending, by a first terminal, sidelink control information includes at least one of the following:

    item E-1: The first terminal sends sidelink control information on a resource group, where the sidelink control information includes resource indication information and/or association information; or

    item E-2: The first terminal sends the sidelink control information on a collection of resource groups, where the collection of resource groups is part of resource groups, a designated resource group, or a primary resource group in the resource groups of the first object; the sidelink control information includes resource indication information and/or association information; and the specific resource group and/or the primary resource group is predefined by a protocol, or pre-configured by a network, or configured by a network, or determined by a terminal.

As an optional embodiment, the association information includes at least one of the following:

    item F-1: a resource group identifier of a resource group in which the resources occupied by the first terminal are located;

    item F-2: resource group identifiers of part of resource groups in which the resources occupied by the first terminal are located;

    item F-3: a resource group identifier of a resource group, with a same starting position of resource group relative to resources in a resource group in which the sidelink control information is located, in the resource group in which the resources occupied by the first terminal are located; or

    item F-4: a resource group identifier of a resource group, with a different starting position of resource group relative to resources in the resource group in which the sidelink control information is located, in the resource group in which the resources occupied by the first terminal are located.

As an optional embodiment, the resource indication information includes at least one of the following:

    item G-1: The resource indication information includes resource indication information corresponding to a current resource group; where the current resource group is a resource group in which the sidelink control information is located. For example, an FRIV merely indicates a resource in a resource group in which it is located.

item G-2: The resource indication information includes resource indication information of resources occupied and/or reserved by the first terminal. For example, one FRIV indicates all resources occupied and/or reserved by the terminal, or multiple FRIVs indicate all resources to occupied and/or reserved by the terminal;

item G-3: The resource indication information includes resource indication information corresponding to a resource group at least partially occupied and/or reserved by the first terminal; or

item G-4: In a case that the resources occupied and/or reserved by the first terminal are discontinuous, the resource indication information includes resource indication information corresponding to the current resource group and at least part of other resource groups.

In this embodiment of this application, the first terminal may send the sidelink control information on a resource group or send the sidelink control information on a collection of resource groups, where the collection of resource groups is part of resource groups, a designated resource group, or a primary resource group (primary RB set) in the resource groups of the first object.

For item E-1, the first terminal sends the sidelink control information on each RB set. Using the first object as PSSCH and the second object as a resource pool an example, the sidelink control information includes resource indication information FRIV and/or association information, which satisfies at least one of the following contents:

(a) The resource indication information indicates a resource in a current RB set, or resources in all RB sets occupied by the first object.

i. For example, in a first case, during numbering of sub-channels based on each RB set, the first terminal independently sends an FRIV on each RB set in which the PSSCH is located, and this FRIV merely indicates a frequency domain resource allocation status of the current RB set. In addition, during numbering of sub-channels based on a resource pool, the terminal can also send an FRIV on each RB set in which the PSSCH is located to indicate a frequency domain resource allocation status of the current RB set. In this case, a receive end needs to monitor each RB set to determine all frequency domain resources of a transmit end.

ii. In a second case, during numbering of sub-channels based on each RB set, or during numbering of sub-channels based on a resource pool, when frequency domain resources indicated are discontinuous, the first terminal sends an FRIV on each RB set in which the PSSCH is located, and this FRIV indicates a frequency domain resource allocation status of the current PSSCH transmission. In this case, in order to indicate all frequency domain resources, allocation statuses of all frequency domain resources on all RB sets need to be the same, which can be then indicated by using one FRIV; otherwise, multiple FRIVs need to be sent on each RB set to indicate a resource allocation status on all PSSCHs. In another case, a sub-channel size (the number of sub-channels) for frequency domain resource allocation on all PSSCHs is the same, so it is only necessary to additionally indicate starting sub-channels for multiple FRIVs. In this case, for the receive end, when an FRIV on one RB set is detected blindly, other RB sets occupied by PSSCH can be skipped to reduce the detection complexity. A sequence of blind detection at the receive end may be random, or from low to high in frequency domain, or from high to low in frequency domain, or start from a specific RB set or a primary RB set.

iii. In a third case, during numbering of sub-channels based on a resource pool, the simplest thing is that frequency domain resources occupied by PSSCH are continuous in the resource pool. In this case, the resource indication method in R16/R17 can be reused, that is, only one FRIV is used to indicate frequency domain resources in all RB sets. In this case, for the receive end, blind detection on the SCI needs to be performed in the RB set until this FRIV is detected.

(b) The association information is identifiers of N RB sets, where N is an integer. (Indicating that other N RB sets occupied by the currently transmitted TB/TBs may be part or all of remaining occupied RB sets).

i. Optionally, N RB sets are RB sets with a same/different relative position of frequency domain allocation resource as an RB set for sending the indication information and the association information (after detecting the association information, the receive end can skip blind detection on the RB set corresponding to the association information, thus reducing the detection complexity).

1. In a case that starting sub-channels of the frequency domain allocation resource are the same, starting sub-channels of other RB sets may not be sent, or be sent but set to a specific value/invalid value.

ii. Optionally, the N RB sets are pre-configured/configured by the network or determined by the terminal (after detecting such information, the receive end can merely perform detection on these RB sets to reduce the detection complexity).

(c) The association information may be identifiers of N RB sets, or may be a bitmap (bitmap).

i. Optionally, each bit in the bitmap corresponds to an RB set in sequence according to a preset order, for example, an identifier of an RB set may be bit 1 or bit 0 in a corresponding position in the bitmap, or an RB set index, or the like.

(d) The indication information indicates a starting sub-channel and a sub-channel size other than the guard band (assuming that the guard band is included in the sub-channel in this case).

For item E-2, the first terminal sends indication information on a collection of RB sets (the terminal sends the resource indication information on all/part of RB sets on a limited number of RB sets, for example, when FRIVs for all RB sets are sent on only one RB set, if positions of the starting sub-channels on all the RB sets are different, it is necessary to indicate starting sub-channels for FRIVs on other RB sets, so that frequency domain resource indication information of other RB sets can be calculated according to this indication).

(a) The resource indication information includes frequency domain resource indication information on the current RB set and/or resource indication information on all/part of other RB sets.

i. The resource indication information includes the starting sub-channel and/or the starting interlace, and/or the number of sub-channels and/or interlaces.

(b) A collection of RB sets is all RB sets, or part of RB sets, or specific RB sets, and/or primary RB sets occupied by the currently transmitted TB/TBs (when the resource indication information is only an indication on part of RB sets, the receive end may need to perform blind detection on the SCI, featuring high complexity in a broadband case. Therefore, if transmission is only performed on specific RB sets, for example, on the primary RB sets, the complexity of SCI detection can be reduced because both the transmit end and receive end know the positions of the primary RB sets.

i. The terminal sends the resource indication information on a collection of RB sets.

1. For example, the terminal sends the resource indication information on the collection of RB sets, but does not send it on other RB sets, and sends resource indication information related to PSSCH on each RB set in the collection of RB sets. In this case, if the frequency domain resources of the terminal include frequency domain resources outside the collection of RB sets, a plurality of FRIVs and/or association information may be sent on the RB sets in the collection of RB sets to indicate these frequency domain resources. For the receive end, it is not necessary to monitor RB sets outside the collection of RB sets, thus reducing the detection complexity.

ii. The specific RB set or primary RB set is predefined by a protocol, or pre-configured by the network, or configured by the network, or determined by the terminal.

1. For example, one or more primary RB sets can be negotiated or configured between UEs in unicast (unicast).

iii. Optionally, the N RB sets are RB sets with a same/different relative position of frequency domain allocation resource as an RB set for sending the indication information and the association information (after detecting the association information, the receive end skips the blind detection actions on these RB sets and directly decodes the SCI at corresponding sub-channel positions, thus reducing the detection complexity).

1. Optionally, the N RB sets are pre-configured/configured by the network or determined by the terminal (after detecting such information, the receive end merely performs detection on these RB sets to reduce the detection complexity).

As an optional embodiment,

the occupied and/or reserved sub-channels are located in one resource group; or
the occupied and/or reserved sub-channels are located in a plurality of resource groups.

In this embodiment of this application, when one interlace is defined to be in a range greater than 1 RB set, if the sub-channel is configured to include 1 interlace or K interlaces, then:

1. Optionally, the sub-channels indicated by the terminal may be part of interlaces located on a specific RB set (equivalent to allowing the terminal to perform transmission only on part of resources of the RB set).

2. Optionally, the sub-channels indicated by the terminal are all interlaces on a specific RB set (equivalent to allowing the terminal to perform transmission by using all resources on RB sets with the interlaces; otherwise, not performing transmission).

In this embodiment of this application, in a case that the first terminal occupies and/or reserves resources in a plurality of resource groups, utilization of the guard band satisfies at least one of the following:

utilized resources in the guard band are determined by the resources indicated by the first terminal; and resources in the guard band that belong to same interlaces as the resources occupied and/or reserved by the first terminal are usable for transmission.

For example, when the terminal indicates resources of a plurality of resource groups, that is, resources of the plurality of resource groups are occupied or reserved, the guard band between contiguous resource groups can also be considered as being used for PSCCH/PSSCH transmission, that is, whether the guard band is used for PSCCH/PSSCH is implicitly indicated by the indication information, and the receive terminal needs to determine, based on the resource indication information, whether the guard band is used for transmission. Because the guard band contains PRBs belonging to a plurality of interlaces, one case is that all the guard bands are used for transmission, and this case is not described in detail. Another case is that part of the guard bands is used for transmission. For example, to be consistent with resources on other resource groups indicated by the terminal and facilitate multi-user multiplexing, resources, belonging to the same interlaces as these resources, in the guard bands can be used for transmission. For example, the terminal indicates to use sub-channels 0 in RB set 0 and RB set 1 for transmission, and sub-channel 0 corresponds to interlace 0 and interlace 1. That is, in this case, the resources utilized by the terminal are all located in interlace 0 and interlace 1, so PRB resources also belonging to interlace 0 and interlace 1 in the guard bands between RB set 0 and RB set 1 can also be used for transmission, while other PRB resources are not used for transmission. In other words, it can be considered that a guard band between two contiguous resource groups is also implicitly mapped to a corresponding sub-channel according to a correspondence between sub-channels and interlaces in the resource group. In a case that a sub-channel on two contiguous resource groups is indicated as being occupied and/or reserved, the terminal considers that a resource belonging to the guard band on this sub-channel is also used for transmission.

As an optional embodiment, in a case that the sidelink control information of the resource indication information includes the resource indication information corresponding to the current resource group, the sidelink control information includes first-stage SCI and second-stage SCI, and mapping of the second-stage SCI satisfies at least one of the following:

the second-stage SCI is mapped onto a resource group in which the corresponding first-stage SCI is located; or the second-stage SCI is mapped onto a resource occupied by the first terminal according to a frequency-first and time-second rule.

Specifically, in sidelink, PSSCH is used to transmit data. Control information associated with PSSCH is carried in SCIs of PSCCH and PSSCH respectively. The SCI is divided into two stages: 1st-stage SCI (first-stage SCI) in PSCCH and 2nd-stage SCI (second-stage SCI) in PSSCH.

In this embodiment of this application, mapping of the 2nd-stage SCI satisfies at least one of the following conditions:

a) In a case that the SCI is transmitted independently on each RB set, the 2nd-stage SCI is mapped onto the RB set in which the corresponding 1st-stage SCI is located (the advantage is that the terminal can decode each RB set independently) or mapped onto all RB sets occupied by PSSCH (which is equivalent to reusing the rule of R16/R17, with fewer overheads, but it needs to receive all RB sets before demodulation, and in this case, information such as an ID carried by 1st-stage SCI is required for verifying on which RB sets the terminal has sent PSCCH and PSSCH); or

b) In a case that there is only one SCI on the collection of RB sets occupied for transmission, the 2nd-stage SCI is mapped according to the rule of frequency-first and time-second, regardless of whether the resources cross the RB sets; or is mapped according to the rule of frequency-first and time-second in the RB set in which the corresponding 1st-stage SCI is located.

As an optional embodiment, the first terminal sends sidelink control information, where:

the second-stage SCI is mapped onto a guard band; or
the second-stage SCI is not mapped onto the guard band.

In this embodiment of this application, when the guard band is used for transmission of PSSCH, the 2nd-stage SCI may be mapped onto the guard band, or the 2nd-stage SCI may not be mapped onto the guard band.

In this embodiment of this application, the number of RBs of the guard band is equal to the number of interlaces in the resource pool/RB set, and in some cases, the size of sub-channel can be ensured to be consistent even in a case with the guard band.

As an optional embodiment, an order of determining reserved resources in the resource indication information includes at least one of the following:

being randomly determined;
in descending order in frequency domain and/or time domain;
in ascending order in frequency domain and/or time domain; or
preferentially indicating a resource in a resource group corresponding to the resource indication information.

Certainly, in addition to the foregoing order of determining reserved resources, the order of determining reserved resources may alternatively be based on other ways, which is not limited in the embodiments of this application.

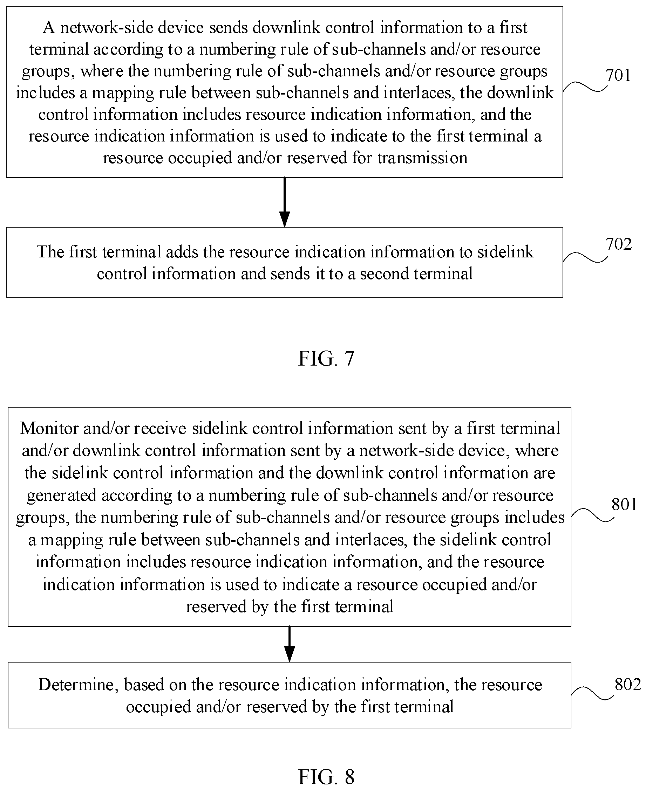

In a second aspect, as shown in FIG. 7, FIG. 7 is an implementation flowchart of another resource indication method according to an embodiment of this application, and the method may include the following steps.

Step 701: A network-side device sends downlink control information to a first terminal according to a numbering rule of sub-channels and/or resource groups, where the numbering rule of sub-channels and/or resource groups includes a mapping rule between sub-channels and interlaces, the downlink control information includes resource indication information, and the resource indication information is used to indicate to the first terminal resources occupied and/or reserved for transmission.

Step 702: The first terminal adds the resource indication information to sidelink control information and sends it to a second terminal.

In this embodiment of this application, the resource indication information may be sent by the first terminal or the network-side device. Specifically, the network-side device may send downlink control information (DCI, Downlink Control Information) to the first terminal according to the numbering rule of sub-channels and/or resource groups, where the downlink control information includes the resource indication information, and resources occupied or reserved by the first terminal in a first object of an unlicensed band can be indicated based on the resource indication information. After receiving the resource indication information, the first terminal may alternatively add the resource indication information to the sidelink control information (SCI) and send it to the second terminal, so that the second terminal can determine the resources occupied or reserved by the first terminal in the first object of the unlicensed band.

As another alternative example, the network-side device may send the downlink control information to the first terminal and the second terminal simultaneously according to the numbering rule of sub-channels and/or resource groups, so that the first terminal and the second terminal can determine the resources occupied or reserved by the first terminal in the first object of the unlicensed band.

It can be learned from the above steps 701 to 702 that, in this embodiment of this application, the numbering rule of sub-channels and/or resource groups is pre-configured, and then the numbering rule of sub-channels and/or resource groups is used for resource indication on an unlicensed band. The resource indication information may be sent to a terminal by a network-side device, for example, after being sent to a first terminal, the first terminal sends it to a second terminal, or the network-side device sends it to the first terminal and the second terminal. In this way, the network-side device can indicate, according to the numbering rule of sub-channels and/or resource groups, a resource occupied or reserved by the first terminal, which can meet rules of OCB and the like on the unlicensed band, without changing an existing sidelink framework. This guarantees resource utilization as well as communication between a sending end and a receiving end in different scenarios, and resolves the problems of resource indication and resource allocation, which can adapt to potential diversified application scenarios and various needs in the future.

In a third aspect, as shown in FIG. 8, FIG. 8 is an implementation flowchart of still another resource indication method according to an embodiment of this application, and the method may include the following steps.

Step 801: Monitor and/or receive sidelink control information sent by a first terminal and/or downlink control information sent by a network-side device, where the sidelink control information and the downlink control information are generated according to a numbering rule of sub-channels and/or resource groups, the numbering rule of sub-channels and/or resource groups includes a mapping rule between sub-channels and interlaces, the sidelink control information includes resource indication information, and the resource indication information is used to indicate resources occupied and/or reserved by the first terminal.

Step 802: Determine, based on the resource indication information, the resources occupied and/or reserved by the first terminal.

In this embodiment of this application, the second terminal, as a receive end, can monitor and/or receive the sidelink control information sent by the first terminal and/or the downlink control information sent by the network-side

EP 4 598 183 A1

device, and then can extract the resource indication information from the sidelink control information or extract the resource indication information from the downlink control information, where the resource indication information is generated by the first terminal or the network-side device according to the numbering rule of sub-channels and/or resource groups. After obtaining the resource indication information, the second terminal can determine the resources occupied or reserved by the first terminal in the first object of the unlicensed band, where the second terminal can determine, according to the numbering rule of sub-channels and/or resource groups, the resources occupied or reserved by the first terminal in the first object of the unlicensed band, specifically, the resources occupied or reserved by the first terminal in the first object in units of sub-channels on the unlicensed band.

It can be learned from the above steps 801 to 802 that, in this embodiment of this application, the numbering rule of sub-channels and/or resource groups is pre-configured, and then the numbering rule of sub-channels and/or resource groups is used for resource indication on an unlicensed band. When a second terminal receives the resource indication information sent by the first terminal or a network-side device, a resource occupied or reserved by the first terminal can be determined according to the resource indication information and the numbering rule of sub-channels and/or resource groups, which can meet rules of OCB and the like on the unlicensed band, without changing an existing sidelink framework. This guarantees resource utilization as well as communication between a sending end and a receiving end in different scenarios, and resolves the problems of resource indication and resource allocation, which can adapt to potential diversified application scenarios and various needs in the future.

As an optional embodiment, the monitoring and/or receiving sidelink control information sent by a first terminal includes at least one of the following:

item H-1: monitoring and/or receiving sidelink control information on a resource group to obtain the resource indication information, where the resource indication information includes resource indication information and/or association information on at least part of resource groups;
item H-2: monitoring and/or receiving sidelink control information on a resource group to obtain the resource indication information, where the resource indication information includes resource indication information and/or association information on a current resource group;
item H-3: monitoring and/or receiving sidelink control information on a collection of resource groups to obtain the resource indication information, where the resource indication information includes resource indication information and/or association information on at least part of collections of resource groups; or
item H-4: monitoring and/or receiving the sidelink control information on a collection of resource groups to obtain the resource indication information, where the resource indication information includes resource indication information and/or association information on at least part of current collections of resource groups.

The resource group identifier is predefined by a protocol, pre-configured or configured by the network-side device, and/or determined by the first terminal, or the resource group identifier is a resource group identifier corresponding to an occupied and/or reserved resource in at least part of resource groups, other than a current resource group for sending the sidelink control information, on the first object in the resources occupied and/or reserved by the first terminal in the first object.

In this embodiment of this application, the second terminal can monitor and/or receive the sidelink control information on each resource group of the first object to obtain the resource indication information, or may monitor and/or receive the sidelink control information on the collection of resource groups of the first object to obtain the resource indication information.

Part of resource groups may be one or more resource groups, or may be all resource groups in the first object, and part of collections of resource groups may be one or more collections of resource groups or all collections of resource groups in the first object.

For item H-1, if the first terminal or the network-side device sends the sidelink control information on each RB set, and the sidelink control information includes an FRIV of X1 RB sets of the first object and resource group identifiers of N RB sets, the second terminal can determine, based on the FRIV of X1 RB sets, resources of X1 RB sets occupied and/or reserved by the first terminal. When the second terminal blindly detects the FRIV of X1 RB sets on one RB set, detection on other RB sets of the first object is skipped, thus reducing the detection complexity.

For item H-2, if the first terminal or the network-side device sends the sidelink control information on each RB set, and the sidelink control information includes an FRIV of a current RB set of the first object and the resource group identifiers of N RB sets, the second terminal can determine, based on the FRIV of the current RB set, resources of the current RB set occupied and/or reserved by the first terminal. In this case, the second terminal can continue to monitor resource groups corresponding to the resource group identifiers of the N RB sets or skip the resource groups corresponding to the resource group identifiers of the N RB sets, so as to skip detection on some RB sets of the first object, thereby reducing the detection complexity.

For item H-3, if the first terminal or the network-side device sends the sidelink control information on the collection

16

of RB sets, and the sidelink control information includes an FRIV of the X2 collections of RB sets of the first object and the resource group identifiers of N RB sets, the second terminal can determine, based on the FRIV of the X2 collections of RB sets, the resources of the X2 collections of RB sets occupied and/or reserved by the first terminal. When the second terminal blindly detects the FRIV of the X2 collections of RB sets on one collection of RB sets, detection on other collections of RB sets of the first object is skipped, thus reducing the detection complexity.

For item H-2, if the first terminal or the network-side device sends the sidelink control information on each RB set, and the sidelink control information includes an FRIV of a current collection of RB sets of the first object and the resource group identifiers of N RB sets, the second terminal can determine, based on the FRIV of the current RB set, resources of the current collection of RB sets occupied and/or reserved by the first terminal. In this case, the second terminal can continue to monitor a collection of resource groups corresponding to the resource group identifiers of the N RB sets or skip the collection of resource groups corresponding to the resource group identifiers of the N RB sets, so as to skip detection on some collections of RB sets of the first object, thereby reducing the detection complexity.

As an optional embodiment, the monitoring and/or receiving sidelink control information sent by the first terminal and/or the network-side device includes at least one of the following: monitoring and/or receiving the sidelink control information on a resource group corresponding to a resource group identifier in the association information, or skipping monitoring and/or receiving the sidelink control information on the resource group corresponding to the resource group identifier in the association information.

In specific implementation, the second terminal can monitor the sidelink control information on each resource group to obtain the resource indication information, so as to determine, based on the resource indication information, the resources occupied or/and reserved by the first terminal.

In this embodiment of this application, the association information may include a resource group identifier, and the second terminal may monitor and/or receive, based on the resource group identifier of the association information, the sidelink control information on a resource group corresponding to the resource group identifier of the association information, or skip detection and/or reception of the sidelink control information on the resource group corresponding to the resource group identifier of the association information, so that the second terminal can stop monitoring other SCIs when detecting SCI on any one RB set or collection of RB sets in which transmission is located, thus reducing the complexity of blind detection.

As an optional embodiment, the sidelink control information includes first-stage SCI and second-stage SCI; and

monitoring and/or decoding the corresponding second-stage SCI is performed on a resource group in which the first-stage SCI is located; or

monitoring and/or decoding the second-stage SCI is performed on the resource occupied or reserved by the first terminal.

In this embodiment of this application, the second terminal only monitors and/or decodes the corresponding second-stage SCI on the resource group in which the first-stage SCI is located, or the second terminal monitors and/or decodes the second-stage SCI on a resource indicated by a transmit end.

As an optional embodiment,

monitoring and/or decoding the second-stage SCI is performed on a guard band; or

monitoring and/or decoding the second-stage SCI is performed on a non-guard band.

In this embodiment of this application, the second terminal may monitor and/or decode the second-stage SCI on the guard band, or may not monitor and/or decode the second-stage SCI in the guard band (the non-guard band).

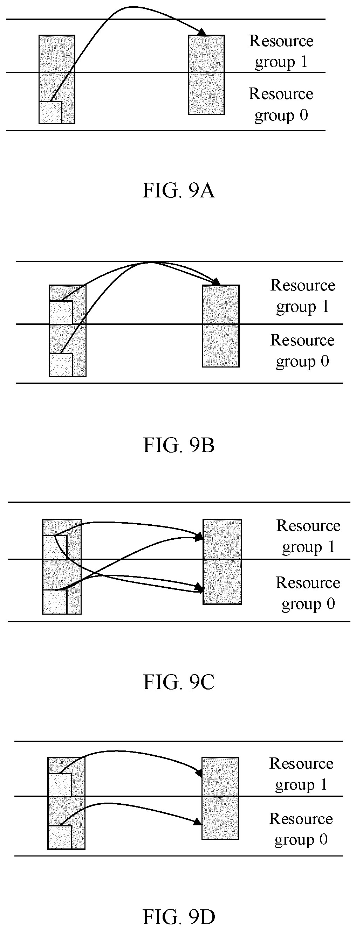

In actual implementation, using frequency domain resources as an example (which is, certainly, also applicable to other resources such as time domain resources), there are different methods for indicating frequency domain resources under different conditions. A first method is to reuse a concept of frequency domain resource indication of R16/R17, that is, the terminal sends an FRIV on the PSCCH to indicate a starting sub-channel and the number of sub-channels of a reserved resource, as shown in the following FIG. 9A. This method features relatively small overheads, and requires that the reserved resources need be contiguous in frequency domain even in a case of cross-RB set. It also requires that all terminals are not capability-limited terminals, that is, having SCI detection capabilities on all RB sets. Therefore, a relatively improvement method is that the terminal sends SCI on each RB set in which the PSSCH is located, that is, sending frequency domain resource indication information, as shown in the following FIG. 9B. In this indication method, frequency domain resources indicated by each SCI are still all frequency domain resources occupied by PSSCH.

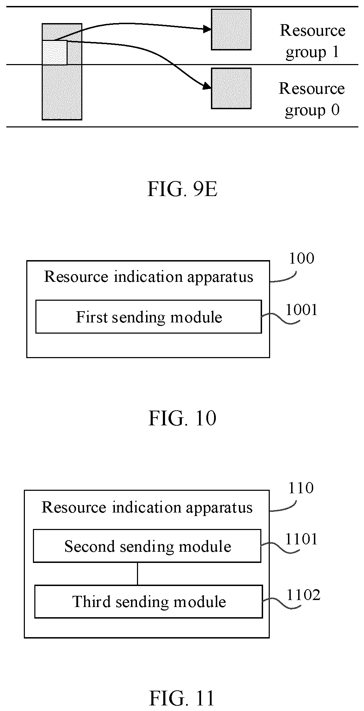

However, when the terminal sends PSSCH/PSCCH on a plurality of RB sets, if both sub-channels and interlaces are defined within the RB set, in this case, the terminal cannot use one FRIV to indicate resource allocation statuses of a plurality of RB sets, because the sub-channels on each RBSET are numbered independently. If all frequency domain resources occupied by PSSCH still need to be indicated, a plurality of FRIVs need to be sent in SCI, and each FRIV corresponds to a frequency domain resource allocation status of one RB set, as shown in FIG. 9C. In addition, if a position of a starting sub-channel on each RB set is different, starting sub-channels of the FRIVs for other RB sets need to be indicated on this RB set, so that the frequency domain resource indication information of other RB sets can be obtained through calculation according to this indication. Undoubtedly, this indication method is relatively complex. Therefore, relatively, there are two improvement methods to resolve this problem. One is that the terminal merely indicates, on each RB set, a resource allocation status of this RB set, as shown in FIG. 9D; or indicates, on some RB sets, resource allocation statuses of all RB sets, as shown in FIG. 9E.

In the first case, indication of the resource allocation status is relatively simple. In this case, according to this concept, the second-stage SCI is merely mapped onto an independent RB set. In R16/R17, the second-stage SCI is mapped based on the method of frequency-first and time-second, which is irrelative to the RB set. Therefore, under SLU (unlicensed band of sidelink), the mapping rule of the 2nd-stage SCI may need to be modified. During mapping of the second-stage SCI, a boundary of the RB set needs to be considered, that is, mapping is performed in the RB set based on the method of frequency-first and time-second.

In the second case, the indication of resource allocation is more complex. The first scenario may be similar to the foregoing first case, in which the terminal performs resource indication on each RB set, but may indicate resource allocation statuses of all RB sets or resource allocation statuses of other L RB sets, as shown in FIG. 9C. In this case, the receive end can stop monitoring other SCIs when detecting SCI on any one RB set in which transmission is located, thus reducing the complexity of blind detection. The second scenario may be that the terminal sends the resource indication information only on some RB sets, for example, only on one RB set, for example, on the lowest/highest/specific/primary RB set, as shown in FIG. 9E, or sends it on part of RB sets, and carries the association information on some RB sets. The first association indication is used to indicate other N RB sets. The N RB sets are RB sets with a same relative position of frequency domain allocation resource as an RB set for sending the resource indication information and the association information. The same relative position means that a start sub-channel of a frequency domain resource in each RB set is the same. In a case that the receive end detects this information, it can skip blind detection on these RB sets to reduce the detection complexity, or the N RB sets are pre-configured/configured by the network or determined by the terminal, and after detecting this information, the receive end performs detection only on these RB sets and skips other RB sets to reduce the detection complexity.

This embodiment of this application defines how to indicate resources in different RB sets when the terminal sends only one SCI in the SLU scenario or when the terminal sends SCI in each RB set. In addition, the relationship between sub-channels and interlaces in the SLU scenario is defined.

For the resource indication method provided in the embodiments of this application, the execution subject can be a resource indication apparatus. A resource indication apparatus provided in an embodiment of this application is described by assuming that the resource indication method in this embodiment of this application is performed by the resource indication apparatus.

In a fourth aspect, an embodiment of this application provides a resource indication apparatus, where the apparatus can be applied to a first terminal. As shown in FIG. 10, the resource indication apparatus 100 includes:

a first sending module 1001, configured to, for a first terminal, send sidelink control information according to a numbering rule of sub-channels and/or resource groups, where the numbering rule of sub-channels and/or resource groups includes a mapping rule between sub-channels and interlaces, the sidelink control information includes resource indication information, and the resource indication information is used to indicate resources occupied and/or reserved by the first terminal.

According to the embodiments of this application, the first terminal sends the sidelink control information according to the numbering rule of sub-channels and/or resource groups, where the numbering rule of sub-channels and/or resource groups may include the mapping rule between sub-channels and interlaces, and the sidelink control information includes resource indication information, and the resource indication information is used to indicate resources occupied and/or reserved by the first terminal. According to the embodiments of this application, the mapping rule between sub-channels and interlaces is pre-configured, and then the mapping rule between sub-channels and interlaces is used for resource indication on an unlicensed band, so that the first terminal can indicate, according to the mapping rule between sub-channels and interlaces, the resource occupied or reserved by the first terminal, which can meet rules of OCB and the like on the unlicensed band, without changing an existing sidelink framework. This guarantees resource utilization as well as communication between a sending end and a receiving end in different scenarios, and resolves the problems of resource indication and resource allocation, which can adapt to potential diversified application scenarios and various needs in the future.

Optionally, the numbering rule of sub-channels and/or resource groups satisfies at least one of the following:

the sub-channel includes one interlace;
or,
the sub-channel includes K interlaces, and the resource group includes M interlaces, where K and M are integers, K is a divisor of M, or K is not a divisor of M.

Optionally,
in a case that K is not a divisor of M and that a remainder obtained through modulo operation on M and K is m, m being an integer, the numbering rule of sub-channels and/or resource groups satisfies at least one of the following:

sub-channels in the resource group are numbered from the (m+1)-th interlace; or
the sub-channels in the resource group are numbered from the 1st interlace.

Optionally, the numbering rule of sub-channels and/or resource groups includes at least one of the following:

on a second object, sub-channel indexes of the sub-channels start from 0 and increase in ascending order or descending order in frequency domain;
on the second object, the sub-channel indexes of the sub-channels start from a first starting sequence number and increase in ascending order or descending order in frequency domain; where the first starting sequence number is configured or pre-configured by a network-side device or determined by a terminal;
on at least part of the resource groups, sub-channel indexes of the sub-channels start from 0 and increase in ascending order or descending order in frequency domain;
on at least part of the resource groups, the sub-channel indexes of the sub-channels start from the first starting sequence number and increase in ascending order or descending order in frequency domain;
on at least part of the resource groups, the sub-channel indexes of the sub-channels start from an index of an interlace at a lowest or highest frequency domain position on the resource group, and increase in ascending order or descending order in frequency domain;
on the second object, resource group indexes of the resource groups start from 0 and increase in ascending order or descending order in frequency domain; or
on the second object, the resource group indexes of the resource groups start from a second starting sequence number and increase in ascending order or descending order in frequency domain; where the second starting sequence number is configured or pre-configured by the network-side device or determined by the terminal.

Optionally, the mapping rule between sub-channels and interlaces includes at least one of the following:

a sub-channel index number of the sub-channel is the same as an interlace index of the interlace in each corresponding resource group;
the sub-channel index number of the sub-channel increases accordingly with an increase of the resource group identifier of each corresponding resource group and the interlace index of the interlace of the resource group;
the sub-channel includes an interlace with a same index order as the sub-channel in the resource group;
the sub-channel includes an interlace whose index is deviated from the sub-channel index by N in the resource group, where N is a total number of sub-channels included in a resource group that is higher or lower in frequency domain than the resource group;
in the 1st resource group, the sub-channel indexes of the sub-channels are the same as the interlace indexes of the interlaces of the corresponding 1st resource group; or
in the 1st resource group, the sub-channel indexes of the sub-channels are numbered sequentially starting from 0.

Optionally, numbers of the sub-channels and/or the resource groups are predefined by a protocol or determined based on a configuration and/or pre-configuration of a second object.
Optionally, the configuration and/or pre-configuration of the second object includes at least one of the following: a first starting sequence number, a second starting sequence number, a starting position of the sub-channel, the total number of sub-channels, a starting position of the resource group, and a total number of resource groups, and the second object includes at least one of the following:
a carrier, a bandwidth part, a resource pool, a virtual resource pool, a virtual bandwidth part, and a resource range that is able to be indicated.
Optionally, the sidelink control information includes at least one of the following:

a starting position of a sub-channel in resource indication information in the sidelink control information is determined according to a configuration and/or pre-configuration of a second object;
the resource indication information in the sidelink control information is determined based on the total number of sub-channels, where the total number of sub-channels is determined according to the configuration and/or pre-configuration of the second object;

the resource indication information in the sidelink control information is determined based on a starting position of a resource group, where the starting position of the resource group is determined according to the configuration and/or pre-configuration of the second object; or

the resource indication information in the sidelink control information is determined based on the total number of resource groups, where the total number of resource groups is predefined by a protocol or configured or pre-configured for the second object.

Optionally, the sending, by a first terminal, sidelink control information includes at least one of the following:

sending, by the first terminal, the sidelink control information on a resource group, where the sidelink control information includes resource indication information and/or association information; or

sending, by the first terminal, the sidelink control information on a collection of resource groups, where the collection of resource groups is part of resource groups, a designated resource group, or a primary resource group in the resource groups of the first object; the sidelink control information includes resource indication information and/or association information; and the specific resource group and/or the primary resource group is predefined by a protocol, or pre-configured by a network, or configured by a network, or determined by a terminal.

Optionally,

the occupied and/or reserved sub-channels are located in one resource group; or

the occupied and/or reserved sub-channels are located in a plurality of resource groups.

Optionally, the association information includes at least one of the following:

a resource group identifier of a resource group in which the resources occupied by the first terminal are located;

resource group identifiers of part of resource groups in which the resources occupied by the first terminal are located;

a resource group identifier of a resource group, with a same starting position of resource group relative to resources in a resource group in which the sidelink control information is located, in the resource group in which the resources occupied by the first terminal are located; or

a resource group identifier of a resource group, with a different starting position of resource group relative to resources in the resource group in which the sidelink control information is located, in the resource group in which the resources occupied by the first terminal are located.

Optionally, the resource indication information includes at least one of the following:

the resource indication information includes resource indication information corresponding to a current resource group; where the current resource group is a resource group in which the sidelink control information is located;

the resource indication information includes resource indication information of resources occupied and/or reserved by the first terminal;

the resource indication information includes resource indication information corresponding to a resource group at least partially occupied and/or reserved by the first terminal; or

in a case that the resources occupied and/or reserved by the first terminal are discontinuous, the resource indication information includes resource indication information corresponding to the current resource group and at least part of other resource groups.

Optionally, in a case that the sidelink control information of the resource indication information includes the resource indication information corresponding to the current resource group, the sidelink control information includes first-stage SCI and second-stage SCI, and mapping of the second-stage SCI satisfies at least one of the following:

the second-stage SCI is mapped onto a resource group in which the corresponding first-stage SCI is located; or

the second-stage SCI is mapped onto a resource occupied by the first terminal according to a frequency-first and time-second rule.

Optionally, the first terminal sends the sidelink control information, where:

the second-stage SCI is mapped onto a guard band; or

the second-stage SCI is not mapped onto the guard band.

Optionally, the number of resource blocks included in the guard band is equal to the number of interlaces in a resource pool or resource group.

Optionally, the resource group identifier is predefined by a protocol, pre-configured or configured by a network-side device, and/or determined by the first terminal.

Optionally, an order of determining reserved resources in the resource indication information includes at least one of the following:

being randomly determined;

in descending order in frequency domain and/or time domain;

in ascending order in frequency domain and/or time domain; or

preferentially indicating a resource in a resource group corresponding to the resource indication information.

In a fifth aspect, an embodiment of this application provides a resource indication apparatus, where the apparatus can be applied to a network-side device. As shown in FIG. 11, the resource indication apparatus 110 includes:

a second sending module 1101, configured to, for a network-side device, send downlink control information to a first terminal according to a numbering rule of sub-channels and/or resource groups, where the numbering rule of sub-channels and/or resource groups includes a mapping rule between sub-channels and interlaces, the downlink control information includes resource indication information, and the resource indication information is used to indicate to the first terminal resources occupied and/or reserved for transmission; and

a third sending module 1102, configured to, for the first terminal, add the resource indication information to sidelink control information and send it to a second terminal.

In this embodiment of this application, the numbering rule of sub-channels and/or resource groups is pre-configured, and then the numbering rule of sub-channels and/or resource groups is used for resource indication on an unlicensed band. The resource indication information may be sent to a terminal by a network-side device, for example, after being sent to a first terminal, the first terminal sends it to a second terminal, or the network-side device sends it to the first terminal and the second terminal. In this way, the network-side device can indicate, according to the numbering rule of sub-channels and/or resource groups, a resource occupied or reserved by the first terminal, which can meet rules of OCB and the like on the unlicensed band, without changing an existing sidelink framework. This guarantees resource utilization as well as communication between a sending end and a receiving end in different scenarios, and resolves the problems of resource indication and resource allocation, which can adapt to potential diversified application scenarios and various needs in the future.

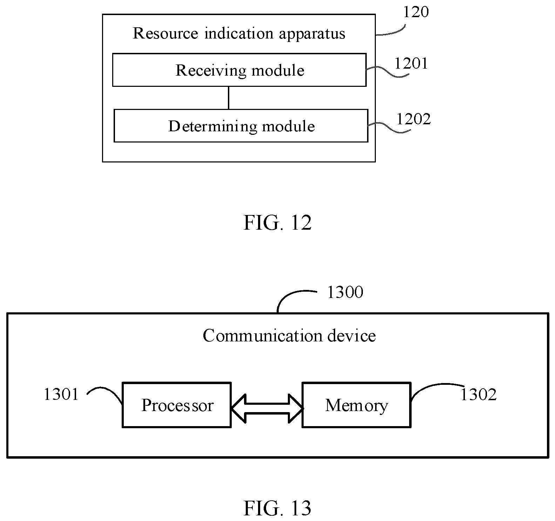

In a sixth aspect, an embodiment of this application provides a resource indication apparatus, where the apparatus can be applied to a network-side device. As shown in FIG. 12, the resource indication apparatus 120 includes:

a receiving module 1201, configured to monitor and/or receive sidelink control information sent by a first terminal and/or downlink control information sent by a network-side device, where the sidelink control information and the downlink control information are generated according to a numbering rule of sub-channels and/or resource groups, the numbering rule of sub-channels and/or resource groups includes a mapping rule between sub-channels and interlaces, the sidelink control information includes resource indication information, and the resource indication information is used to indicate resources occupied and/or reserved by the first terminal; and

a determining module 1202, configured to determine, based on the resource indication information, the resources occupied and/or reserved by the first terminal.

In this embodiment of this application, the numbering rule of sub-channels and/or resource groups is pre-configured, and then the numbering rule of sub-channels and/or resource groups is used for resource indication on an unlicensed band. When a second terminal receives the resource indication information sent by the first terminal or a network-side device, a resource occupied or reserved by the first terminal can be determined according to the resource indication information and the numbering rule of sub-channels and/or resource groups, which can meet rules of OCB and the like on the unlicensed band, without changing an existing sidelink framework. This guarantees resource utilization as well as communication between a sending end and a receiving end in different scenarios, and resolves the problems of resource indication and resource allocation, which can adapt to potential diversified application scenarios and various needs in the future.

Optionally, the monitoring and/or receiving sidelink control information sent by a first terminal includes at least one of the following:

monitoring and/or receiving sidelink control information on a resource group to obtain the resource indication information, where the resource indication information includes resource indication information and/or association information on at least part of resource groups;

monitoring and/or receiving sidelink control information on a resource group to obtain the resource indication information, where the resource indication information includes resource indication information and/or association information on a current resource group;

monitoring and/or receiving sidelink control information on a collection of resource groups to obtain the resource indication information, where the resource indication information includes resource indication information and/or association information on at least part of collections of resource groups; or

monitoring and/or receiving the sidelink control information on a collection of resource groups to obtain the resource indication information, where the resource indication information includes resource indication information and/or association information on at least part of current collections of resource groups.

Optionally, the resource group identifier is predefined by a protocol, pre-configured or configured by the network-side device, and/or determined by the first terminal, or the resource group identifier is a resource group identifier corresponding to an occupied and/or reserved resource in at least part of resource groups, other than a current resource group for sending the sidelink control information, on the first object in the resources occupied and/or reserved by the first terminal in the first object.

Optionally, the monitoring and/or receiving sidelink control information sent by the first terminal and/or the network-side device includes at least one of the following: monitoring and/or receiving the sidelink control information on a resource group corresponding to a resource group identifier in the association information, or skipping monitoring and/or receiving the sidelink control information on the resource group corresponding to the resource group identifier in the association information.

Optionally, the sidelink control information includes first-stage SCI and second-stage SCI; and

monitoring and/or decoding the corresponding second-stage SCI is performed on a resource group in which the first-stage SCI is located; or

monitoring and/or decoding the second-stage SCI is performed on the resource occupied or reserved by the first terminal.

Optionally,

monitoring and/or decoding the second-stage SCI is performed on a guard band; or

monitoring and/or decoding the second-stage SCI is not performed on a guard band.

The resource indication apparatus in this embodiment of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal listed above, and other devices may be a server, a network attached storage (Network Attached Storage, NAS), and the like. This is not limited in the embodiments of this application.

The resource indication apparatus provided in this embodiment of this application is capable of implementing the processes implemented in the method embodiments in FIG. 2 to FIG. 6, with the same technical effects achieved. To avoid repetition, details are not described herein again.

Optionally, as shown in FIG. 13, an embodiment of this application further provides a communication device 1300, including a processor 1301 and a memory 1302. A program or instruction capable of running on the processor 1301 is stored in the memory 1302. For example, when the communication device 1300 is a terminal and when the program or the instructions are executed by the processor 1301, the steps of the foregoing embodiments of the resource indication method are implemented, with the same technical effects achieved. When the communication device 1300 is a network-side device, and the program or instruction is executed by the processor 1301, each process of the foregoing resource indication method embodiment is implemented, with the same technical effect achieved. To avoid repetition, details are not described herein again.

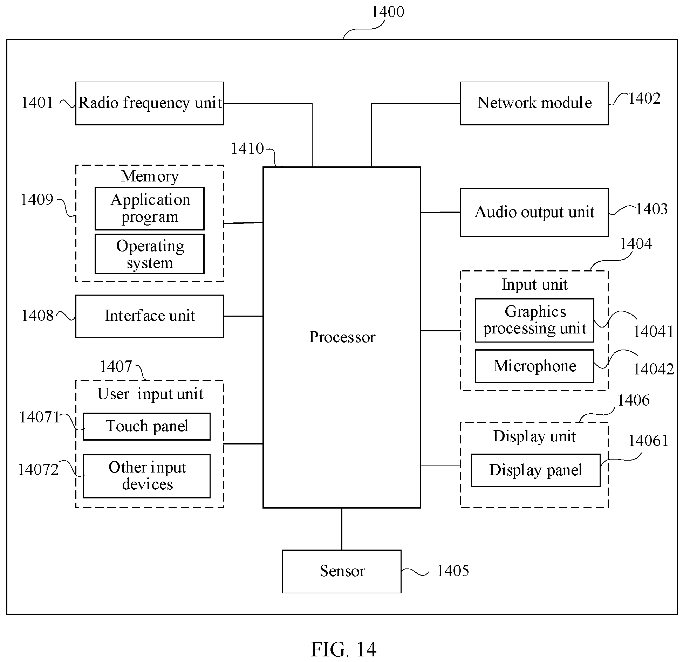

An embodiment of this application further provides a terminal. FIG. 14 is a schematic structural diagram of hardware of a terminal according to an embodiment of this application.

The terminal 1400 includes but is not limited to at least part of components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

Persons skilled in the art can understand that the terminal 1400 may further include a power supply (for example, a battery) supplying power to the components, and the power supply may be logically connected to the processor 1410 through a power management system. In this way, functions such as charge management, discharge management, and power consumption management are implemented by using the power management system. The structure of the terminal shown in FIG. 14 does not constitute any limitation on the terminal. The terminal may include more or fewer components than shown in the figure, or a combination of some components, or the components disposed differently. Details are not described herein again.

It can be understood that in this embodiment of this application, the input unit 1404 may include a graphics processing unit (Graphics Processing Unit, GPU) 14041 and a microphone 14042. The graphics processing unit 14041 processes image data of a still picture or video obtained by an image capture apparatus (such as a camera) in a video capture mode or an image capture mode. The display unit 1406 may include the display panel 14061. The display panel 14061 may be configured in a form of a liquid crystal display, an organic light-emitting diode, or the like. The user input unit 1407 includes at least one of a touch panel 14071 and other input devices 14072. The touch panel 14071 is also referred to as a touchscreen. The touch panel 14071 may include two parts: a touch detection apparatus and a touch controller. The other input devices 14072 may include but are not limited to a physical keyboard, a functional button (such as a volume control button or a power on/off button), a trackball, a mouse, and a joystick. Details are not described herein.

In this embodiment of this application, after receiving downlink data from a network-side device, the radio frequency unit 1401 sends the downlink data to the processor 1410 for processing; and the radio frequency unit 1401 also sends uplink data to the network-side device. Generally, the radio frequency unit 1401 includes, but is not limited to, an antenna, an amplifier, a transceiver, a coupler, a low noise amplifier, a duplexer, and the like.

The memory 1409 may be configured to store software programs or instructions and various data. The memory 1409 may mainly include a first storage area for storing programs or instructions and a second storage area for storing data, where the first storage area may store an operating system, an application program or instruction required by at least one function (for example, an audio playing function and an image playing function), and the like. In addition, the memory 1409 may be a volatile memory or a non-volatile memory, or the memory 1409 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1409 described in this embodiment this application includes but is not limited to these and any other suitable types of memories.

The processor 1410 may include one or more processing units. Optionally, the processor 1410 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 1410.

The radio frequency unit 1401 is configured to, for a first terminal, send sidelink control information according to a numbering rule of sub-channels and/or resource groups, where the numbering rule of sub-channels and/or resource groups includes a mapping rule between sub-channels and interlaces, the sidelink control information includes resource indication information, and the resource indication information is used to indicate resources occupied and/or reserved by the first terminal.

Optionally, the numbering rule of sub-channels and/or resource groups satisfies at least one of the following:

the sub-channel includes one interlace;
or,
the sub-channel includes K interlaces, and the resource group includes M interlaces, where K and M are integers, K is a divisor of M, or K is not a divisor of M.

Optionally,
in a case that K is not a divisor of M and that a remainder obtained through modulo operation on M and K is m, m being an integer, the numbering rule of sub-channels and/or resource groups satisfies at least one of the following:

sub-channels in the resource group are numbered from the (m+1)-th interlace; or
the sub-channels in the resource group are numbered from the 1st interlace.

Optionally, the numbering rule of sub-channels and/or resource groups includes at least one of the following:

on a second object, sub-channel indexes of the sub-channels start from 0 and increase in ascending order or descending order in frequency domain;

on the second object, the sub-channel indexes of the sub-channels start from a first starting sequence number and increase in ascending order or descending order in frequency domain; where the first starting sequence number is configured or pre-configured by a network-side device or determined by a terminal;

on at least part of the resource groups, sub-channel indexes of the sub-channels start from 0 and increase in ascending order or descending order in frequency domain;

on at least part of the resource groups, the sub-channel indexes of the sub-channels start from the first starting sequence number and increase in ascending order or descending order in frequency domain;

on at least part of the resource groups, the sub-channel indexes of the sub-channels start from an index of an interlace at a lowest or highest frequency domain position on the resource group, and increase in ascending order or descending order in frequency domain;

on the second object, resource group indexes of the resource groups start from 0 and increase in ascending order or descending order in frequency domain; or

on the second object, the resource group indexes of the resource groups start from a second starting sequence number and increase in ascending order or descending order in frequency domain; where the second starting sequence number is configured or pre-configured by the network-side device or determined by the terminal.

Optionally, the mapping rule between sub-channels and interlaces includes at least one of the following:

a sub-channel index number of the sub-channel is the same as an interlace index of the interlace in each corresponding resource group;

the sub-channel index number of the sub-channel increases accordingly with an increase of the resource group identifier of each corresponding resource group and the interlace index of the interlace of the resource group;

the sub-channel includes an interlace with a same index order as the sub-channel in the resource group;

the sub-channel includes an interlace whose index is deviated from the sub-channel index by N in the resource group, where N is a total number of sub-channels included in a resource group that is higher or lower in frequency domain than the resource group;

in the 1st resource group, the sub-channel indexes of the sub-channels are the same as the interlace indexes of the interlaces of the corresponding 1st resource group; or

in the 1st resource group, the sub-channel indexes of the sub-channels are numbered sequentially starting from 0.

Optionally, numbers of the sub-channels and/or the resource groups are predefined by a protocol or determined based on a configuration and/or pre-configuration of a second object.

Optionally, the configuration and/or pre-configuration of the second object includes at least one of the following: a first starting sequence number, a second starting sequence number, a starting position of the sub-channel, the total number of sub-channels, a starting position of the resource group, and a total number of resource groups, and the second object includes at least one of the following:

a carrier, a bandwidth part, a resource pool, a virtual resource pool, a virtual bandwidth part, and a resource range that is able to be indicated.

Optionally, the sidelink control information includes at least one of the following:

a starting position of a sub-channel in resource indication information in the sidelink control information is determined according to a configuration and/or pre-configuration of a second object;

the resource indication information in the sidelink control information is determined based on the total number of sub-channels, where the total number of sub-channels is determined according to the configuration and/or pre-configuration of the second object;

the resource indication information in the sidelink control information is determined based on a starting position of a resource group, where the starting position of the resource group is determined according to the configuration and/or pre-configuration of the second object; or

the resource indication information in the sidelink control information is determined based on the total number of resource groups, where the total number of resource groups is predefined by a protocol or configured or pre-configured for the second object.

Optionally, the sending, by a first terminal, sidelink control information includes at least one of the following:

sending, by the first terminal, the sidelink control information on a resource group, where the sidelink control information includes resource indication information and/or association information; or

sending, by the first terminal, the sidelink control information on a collection of resource groups, where the collection of resource groups is part of resource groups, a designated resource group, or a primary resource group in the resource groups of the first object; the sidelink control information includes resource indication information and/or association information; and the specific resource group and/or the primary resource group is predefined by a protocol, or pre-configured by a network, or configured by a network, or determined by a terminal.

Optionally,

the occupied and/or reserved sub-channels are located in one resource group; or
the occupied and/or reserved sub-channels are located in a plurality of resource groups.

Optionally, the association information includes at least one of the following:

a resource group identifier of a resource group in which the resources occupied by the first terminal are located;
resource group identifiers of part of resource groups in which the resources occupied by the first terminal are located;
a resource group identifier of a resource group, with a same starting position of resource group relative to resources in a resource group in which the sidelink control information is located, in the resource group in which the resources occupied by the first terminal are located; and
a resource group identifier of a resource group, with a different starting position of resource group relative to resources in the resource group in which the sidelink control information is located, in the resource group in which the resources occupied by the first terminal are located.

Optionally, the resource indication information includes at least one of the following:

the resource indication information includes resource indication information corresponding to a current resource group; where the current resource group is a resource group in which the sidelink control information is located;
the resource indication information includes resource indication information of resources occupied and/or reserved by the first terminal;
the resource indication information includes resource indication information corresponding to a resource group at least partially occupied and/or reserved by the first terminal; and
in a case that the resources occupied and/or reserved by the first terminal are discontinuous, the resource indication information includes resource indication information corresponding to the current resource group and at least part of other resource groups.

Optionally, in a case that the sidelink control information of the resource indication information includes the resource indication information corresponding to the current resource group, the sidelink control information includes first-stage SCI and second-stage SCI, and mapping of the second-stage SCI satisfies at least one of the following:

the second-stage SCI is mapped onto a resource group in which the corresponding first-stage SCI is located; or
the second-stage SCI is mapped onto a resource occupied by the first terminal according to a frequency-first and time-second rule.

Optionally, the first terminal sends the sidelink control information, where:

the second-stage SCI is mapped onto a guard band; or
the second-stage SCI is not mapped onto the guard band.

Optionally, the number of resource blocks included in the guard band is equal to the number of interlaces in a resource pool or resource group.

Optionally, the resource group identifier is predefined by a protocol, pre-configured or configured by a network-side device, and/or determined by the first terminal.

Optionally, an order of determining reserved resources in the resource indication information includes at least one of the following:

being randomly determined;
in descending order in frequency domain and/or time domain;
in ascending order in frequency domain and/or time domain; or
preferentially indicating a resource in a resource group corresponding to the resource indication information.

The radio frequency unit 1401 is configured to monitor and/or receive sidelink control information sent by a first terminal and/or downlink control information sent by a network-side device, where the sidelink control information and the downlink control information are generated according to a numbering rule of sub-channels and/or resource groups, the numbering rule of sub-channels and/or resource groups includes a mapping rule between sub-channels and interlaces, the sidelink control information includes resource indication information, and the resource indication information is used to indicate resources occupied and/or reserved by the first terminal.

The radio frequency unit 1401 is configured to determine, based on the resource indication information, the resources occupied and/or reserved by the first terminal.

Optionally, the monitoring and/or receiving sidelink control information sent by a first terminal includes at least one of the following:

monitoring and/or receiving sidelink control information on a resource group to obtain the resource indication information, where the resource indication information includes resource indication information and/or association information on at least part of resource groups;

monitoring and/or receiving sidelink control information on a resource group to obtain the resource indication information, where the resource indication information includes resource indication information and/or association information on a current resource group;

monitoring and/or receiving sidelink control information on a collection of resource groups to obtain the resource indication information, where the resource indication information includes resource indication information and/or association information on at least part of collections of resource groups; or

monitoring and/or receiving the sidelink control information on a collection of resource groups to obtain the resource indication information, where the resource indication information includes resource indication information and/or association information on at least part of current collections of resource groups.

Optionally, the resource group identifier is predefined by a protocol, pre-configured or configured by the network-side device, and/or determined by the first terminal, or the resource group identifier is a resource group identifier corresponding to an occupied and/or reserved resource in at least part of resource groups, other than a current resource group for sending the sidelink control information, on the first object in the resources occupied and/or reserved by the first terminal in the first object.

Optionally, the monitoring and/or receiving sidelink control information sent by the first terminal and/or the network-side device includes at least one of the following: monitoring and/or receiving the sidelink control information on a resource group corresponding to a resource group identifier in the association information, or skipping monitoring and/or receiving the sidelink control information on the resource group corresponding to the resource group identifier in the association information.

Optionally, the sidelink control information includes first-stage SCI and second-stage SCI; and

monitoring and/or decoding the corresponding second-stage SCI is performed on a resource group in which the first-stage SCI is located; or

monitoring and/or decoding the second-stage SCI is performed on the resource occupied or reserved by the first terminal.

Optionally,

monitoring and/or decoding the second-stage SCI is performed on a guard band; or

monitoring and/or decoding the second-stage SCI is performed on a non-guard band.

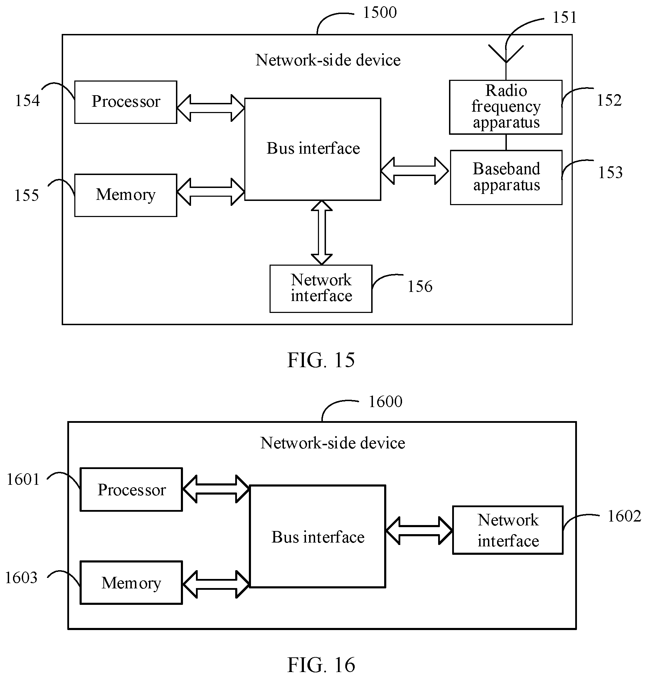

An embodiment of this application further provides a network-side device. As shown in FIG. 15, the network-side device 1500 includes an antenna 151, a radio frequency apparatus 152, a baseband apparatus 153, a processor 154, and a memory 155. The antenna 151 is connected to the radio frequency apparatus 152. In an uplink direction, the radio frequency apparatus 152 receives information by using the antenna 151, and sends the received information to the baseband apparatus 153 for processing. In a downlink direction, the baseband apparatus 153 processes to-be-sent information, and sends the information to the radio frequency apparatus 152; and the radio frequency apparatus 152 processes the received information and then sends the information out by using the antenna 151.

The method performed by the network-side device in the foregoing embodiment may be implemented in the baseband apparatus 153, and the baseband apparatus 153 includes a baseband processor.

The baseband apparatus 153 may include, for example, at least one baseband processing unit, where a plurality of chips are disposed on the baseband processing unit. As shown in FIG. 15, one of the chips is, for example, the baseband processor, and connected to the memory 155 through a bus interface, to invoke the program in the memory 155 to perform the operations of the network device shown in the foregoing method embodiment.

The network-side device may further include a network interface 156, where the interface is, for example, a common public radio interface (common public radio interface, CPRI).

Specifically, the network-side device 1500 in this embodiment of the present invention further includes a program or instruction stored in the memory 155 and capable of running on the processor 154. When the processor 154 invokes the program or instruction in the memory 155, the method shown in FIG. 7 is performed, with the same technical effects achieved. To avoid repetition, details are not described herein again.

An embodiment of this application further provides a network-side device. As shown in FIG. 16, the network-side device 1600 includes a processor 1601, a network interface 1602, and a memory 1603. The network interface 1602 is, for example, a common public radio interface (common public radio interface, CPRI).

Specifically, the network-side device 1600 according to this embodiment of the present invention further includes instructions or programs stored in the memory 1603 and capable of running on the processor 1601, and the processor 1601 calls the instructions or programs in the memory 1603 to execute the methods performed by the modules shown in FIG. 7, with the same technical effects achieved. To avoid repetition, details are not described herein again.

An embodiment of this application further provides a readable storage medium. The readable storage medium stores a program or an instruction. When the program or instruction is executed by a processor, each process of the foregoing resource indication method embodiment is implemented, with the same technical effect achieved. To avoid repetition, details are not described herein again.

The processor is a processor in the terminal described in the above embodiments. The readable storage medium includes a computer-readable storage medium, for example, a computer read only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction to implement the processes of the foregoing embodiments of the resource indication method, with the same technical effect achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the resource indication method, with the same technical effects achieved. To avoid repetition, details are not repeated herein.

An embodiment of this application further provides a resource indication system, including a terminal and a network-side device, where the terminal can be configured to perform the steps of the resource indication method described above, and the network-side device can be configured to perform the steps of the resource indication method described above.

It should be noted that in this specification, the terms "include" and "include", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a ... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this disclosure.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

It can be understood that the embodiments described in the embodiments of this disclosure may be implemented by hardware, software, firmware, middleware, microcode, or a combination thereof. For hardware implementation, a module, a unit, or a subunit may be implemented in one or more application specific integrated circuits (Application Specific Integrated Circuit, ASIC), digital signal processors (Digital Signal Processor, DSP), digital signal processing devices (DSP Device, DSPD), programmable logic devices (Programmable Logic Device, PLD), field-programmable gate arrays (Field-Programmable Gate Array, FPGA), general-purpose processors, controllers, microcontrollers, microprocessors, and other electronic units for performing the functions described in this disclosure, or a combination thereof.

For software implementation, the technologies described in the embodiments of the present disclosure may be implemented by modules (such as processes and functions) that perform the functions described in the embodiments of the present disclosure. Software code may be stored in the memory and executed by the processor. The memory may be implemented in or outside the processor.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1. A resource indication method, comprising:
   sending, by a first terminal, sidelink control information according to a numbering rule of sub-channels and/or resource groups, wherein the numbering rule of sub-channels and/or resource groups comprises a mapping rule between sub-channels and interlaces, the sidelink control information comprises resource indication information, and the resource indication information is used to indicate resources occupied and/or reserved by the first terminal.

2. The method according to claim 1, wherein the numbering rule of sub-channels and/or resource groups satisfies at least one of the following:

   the sub-channel comprises one interlace;
   or,
   the sub-channel comprises K interlaces, and the resource group comprises M interlaces, wherein K and M are integers, K is a divisor of M, or K is not a divisor of M.

3. The method according to claim 2, wherein
   in a case that K is not a divisor of M and that a remainder obtained through modulo operation on M and K is m, m being an integer, the numbering rule of sub-channels and/or resource groups satisfies at least one of the following:

   sub-channels in the resource group are numbered from the (m+1)-th interlace; and
   the sub-channels in the resource group are numbered from the 1st interlace.

4. The method according to claim 1, wherein the numbering rule of sub-channels and/or resource groups comprises at least one of the following:

on a second object, sub-channel indexes of the sub-channels start from 0 and increase in ascending order or descending order in frequency domain;

on the second object, the sub-channel indexes of the sub-channels start from a first starting sequence number and increase in ascending order or descending order in frequency domain; wherein the first starting sequence number is configured or pre-configured by a network-side device or determined by a terminal;

on at least part of the resource groups, sub-channel indexes of the sub-channels start from 0 and increase in ascending order or descending order in frequency domain;

on at least part of the resource groups, the sub-channel indexes of the sub-channels start from the first starting sequence number and increase in ascending order or descending order in frequency domain;

on at least part of the resource groups, the sub-channel indexes of the sub-channels start from an index of an interlace at a lowest or highest frequency domain position on the resource group, and increase in ascending order or descending order in frequency domain;

on the second object, resource group indexes of the resource groups start from 0 and increase in ascending order or descending order in frequency domain; or

on the second object, the resource group indexes of the resource groups start from a second starting sequence number and increase in ascending order or descending order in frequency domain; wherein the second starting sequence number is configured or pre-configured by the network-side device or determined by the terminal.

5. The method according to claim 1, wherein the mapping rule between sub-channels and interlaces comprises at least one of the following:

a sub-channel index number of the sub-channel is the same as an interlace index of the interlace in the corresponding resource group;

the sub-channel index number of the sub-channel increases accordingly with an increase of the resource group identifier of the corresponding resource group and the interlace index of the interlace of the resource group;

the sub-channel comprises an interlace with a same index order as the sub-channel in the resource group;

the sub-channel comprises an interlace whose index is deviated from the sub-channel index by N in the resource group, wherein N is a total number of sub-channels comprised in a resource group that is higher or lower in frequency domain than the resource group;

in the 1st resource group, the sub-channel indexes of the sub-channels are the same as the interlace indexes of the interlaces of the corresponding 1st resource group; or

in the 1st resource group, the sub-channel indexes of the sub-channels are numbered sequentially starting from 0.

6. The method according to claim 1 or 5, wherein a mapping rule of sub-channels and interlaces in a first resource group is the same as a mapping rule of sub-channels and interlaces in a lowest or highest resource group, and the first resource group is a resource group other than the lowest or highest resource group.

7. The method according to claim 1, wherein numbers of the sub-channels and/or the resource groups are predefined by a protocol or determined based on a configuration and/or pre-configuration of a second object.

8. The method according to claim 7, wherein the configuration and/or pre-configuration of the second object comprises at least one of the following: a first starting sequence number, a second starting sequence number, a starting position of the sub-channel, the total number of sub-channels, a starting position of the resource group, and a total number of resource groups, and the second object comprises at least one of the following:
a carrier, a bandwidth part, a resource pool, a virtual resource pool, a virtual bandwidth part, and a resource range that is able to be indicated.

9. The method according to claim 6, wherein the sidelink control information comprises at least one of the following:

a starting position of a sub-channel in resource indication information in the sidelink control information is determined according to a configuration and/or pre-configuration of a second object;

the resource indication information in the sidelink control information is determined based on the total number of sub-channels, wherein the total number of sub-channels is determined according to the configuration and/or pre-configuration of the second object;

the resource indication information in the sidelink control information is determined based on a starting position of a resource group, wherein the starting position of the resource group is determined according to the configuration and/or pre-configuration of the second object; and

the resource indication information in the sidelink control information is determined based on the total number of resource groups, wherein the total number of resource groups is predefined by a protocol or configured or pre-configured for the second object.

10. The method according to claim 1, wherein the sending, by a first terminal, sidelink control information comprises at least one of the following:

sending, by the first terminal, the sidelink control information on a resource group, wherein the sidelink control information comprises resource indication information and/or association information; or

sending, by the first terminal, the sidelink control information on a collection of resource groups, wherein the collection of resource groups is part of resource groups, a designated resource group, or a primary resource group in the resource groups of the first object; the sidelink control information comprises resource indication information and/or association information; and the specific resource group and/or the primary resource group is predefined by a protocol, or pre-configured by a network, or configured by a network, or determined by a terminal.

11. The method according to claim 10, wherein

the occupied and/or reserved sub-channels are located in one resource group; or
the occupied and/or reserved sub-channels are located in a plurality of resource groups.

12. The method according to claim 1, 10, or 11, wherein
in a case that the first terminal occupies and/or reserves resources in the plurality of resource groups, utilization of a guard band satisfies at least one of the following:

utilized resources in the guard band are determined by the resources indicated by the first terminal; or
resources in the guard band that belong to same interlaces as the resources occupied and/or reserved by the first terminal are usable for transmission.

13. The method according to claim 10, wherein the association information comprises at least one of the following:

a resource group identifier of a resource group in which the resources occupied by the first terminal are located;
resource group identifiers of part of resource groups in which the resources occupied by the first terminal are located;
a resource group identifier of a resource group, with a same starting position of resource group relative to resources in a resource group in which the sidelink control information is located, in the resource group in which the resources occupied by the first terminal are located; or
a resource group identifier of a resource group, with a different starting position of resource group relative to resources in the resource group in which the sidelink control information is located, in the resource group in which the resources occupied by the first terminal are located.

14. The method according to claim 10, wherein the resource indication information comprises at least one of the following:

the resource indication information comprises resource indication information corresponding to a current resource group; wherein the current resource group is a resource group in which the sidelink control information is located;
the resource indication information comprises resource indication information of resources occupied and/or reserved by the first terminal;
the resource indication information comprises resource indication information corresponding to a resource group at least partially occupied and/or reserved by the first terminal; or
in a case that the resources occupied and/or reserved by the first terminal are discontinuous, the resource indication information comprises resource indication information corresponding to the current resource group and at least part of other resource groups.

15. The method according to claim 14, wherein in a case that the sidelink control information of the resource indication information comprises the resource indication information corresponding to the current resource group, the sidelink control information comprises first-stage SCI and second-stage SCI, and mapping of the second-stage SCI satisfies at least one of the following:

the second-stage SCI is mapped onto a resource group in which the corresponding first-stage SCI is located; or
the second-stage SCI is mapped onto a resource occupied by the first terminal according to a frequency-first and time-second rule.

16. The method according to claim 15, wherein the first terminal sends the sidelink control information, wherein

the second-stage SCI is mapped onto a guard band; or
the second-stage SCI is not mapped onto the guard band.

17. The method according to claim 16, wherein the number of resource blocks comprised in the guard band is equal to the number of interlaces in a resource pool or resource group.

18. The method according to claim 13, wherein the resource group identifier is predefined by a protocol, pre-configured or configured by a network-side device, and/or determined by the first terminal.

19. The method according to claim 1, wherein an order of determining reserved resources in the resource indication information comprises at least one of the following:

being randomly determined;
in descending order in frequency domain and/or time domain;
in ascending order in frequency domain and/or time domain; or
preferentially indicating a resource in a resource group corresponding to the resource indication information.

20. A resource indication method, comprising:

sending, by a network-side device, downlink control information to a first terminal according to a numbering rule of sub-channels and/or resource groups, wherein the numbering rule of sub-channels and/or resource groups comprises a mapping rule between sub-channels and interlaces, the downlink control information comprises resource indication information, and the resource indication information is used to indicate to the first terminal resources occupied and/or reserved for transmission; and/or
adding, by the first terminal, the resource indication information to sidelink control information and sending it to a second terminal.

21. A resource indication method, comprising:

monitoring and/or receiving sidelink control information sent by a first terminal and/or downlink control information sent by a network-side device, wherein the sidelink control information and the downlink control information are generated according to a numbering rule of sub-channels and/or resource groups, the numbering rule of sub-channels and/or resource groups comprises a mapping rule between sub-channels and interlaces, the sidelink control information comprises resource indication information, and the resource indication information is used to indicate resources occupied and/or reserved by the first terminal; and
determining, based on the resource indication information, the resources occupied and/or reserved by the first terminal.

22. The method according to claim 21, wherein the monitoring and/or receiving sidelink control information sent by a first terminal comprises at least one of the following:

monitoring and/or receiving sidelink control information on a resource group to obtain the resource indication information, wherein the resource indication information comprises resource indication information and/or association information on at least part of resource groups;
monitoring and/or receiving sidelink control information on a resource group to obtain the resource indication information, wherein the resource indication information comprises resource indication information and/or association information on a current resource group;
monitoring and/or receiving sidelink control information on a collection of resource groups to obtain the resource indication information, wherein the resource indication information comprises resource indication information and/or association information on at least part of collections of resource groups; or

monitoring and/or receiving the sidelink control information on a collection of resource groups to obtain the resource indication information, wherein the resource indication information comprises resource indication information and/or association information on at least part of current collections of resource groups.

23. The method according to claim 22, wherein the resource group identifier is predefined by a protocol, pre-configured or configured by the network-side device, and/or determined by the first terminal, or the resource group identifier is a resource group identifier corresponding to an occupied and/or reserved resource in at least part of resource groups, other than a current resource group for sending the sidelink control information, on the first object in the resources occupied and/or reserved by the first terminal in the first object.

24. The method according to claim 23, wherein the monitoring and/or receiving sidelink control information sent by the first terminal and/or the network-side device comprises at least one of the following: monitoring and/or receiving the sidelink control information on a resource group corresponding to a resource group identifier in the association information, or skipping monitoring and/or receiving the sidelink control information on the resource group corresponding to the resource group identifier in the association information.

25. The method according to claim 21, wherein the sidelink control information comprises first-stage SCI and second-stage SCI; and

monitoring and/or decoding the corresponding second-stage SCI is performed on a resource group in which the first-stage SCI is located; or

monitoring and/or decoding the second-stage SCI is performed on the resource occupied or reserved by the first terminal.

26. The method according to claim 24, wherein

monitoring and/or decoding the second-stage SCI is performed on a guard band; or

monitoring and/or decoding the second-stage SCI is performed on a non-guard band.

27. A resource indication apparatus, comprising:

a first sending module, configured to send sidelink control information according to a numbering rule of sub-channels and/or resource groups, wherein the numbering rule of sub-channels and/or resource groups comprises a mapping rule between sub-channels and interlaces, the sidelink control information comprises resource indication information, and the resource indication information is used to indicate resources occupied and/or reserved by the first terminal.

28. A resource indication apparatus, comprising:

a second sending module, configured to send downlink control information to a first terminal according to a numbering rule of sub-channels and/or resource groups, wherein the numbering rule of sub-channels and/or resource groups comprises a mapping rule between sub-channels and interlaces, the downlink control information comprises resource indication information, and the resource indication information is used to indicate to the first terminal resources occupied and/or reserved for transmission; and

a third sending module, configured to, for the first terminal, add the resource indication information to sidelink control information and send it to a second terminal.

29. A resource indication apparatus, comprising:

a receiving module, configured to monitor and/or receive sidelink control information sent by a first terminal and/or downlink control information sent by a network-side device, wherein the sidelink control information and the downlink control information are generated according to a numbering rule of sub-channels and/or resource groups, the numbering rule of sub-channels and/or resource groups comprises a mapping rule between sub-channels and interlaces, the sidelink control information comprises resource indication information, and the resource indication information is used to indicate resources occupied and/or reserved by the first terminal; and

a determining module, configured to determine, based on the resource indication information, the resources occupied and/or reserved by the first terminal.

30. A terminal, comprising a processor and a memory, wherein a program or instruction capable of running on the processor is stored in the memory, and when the program or instruction is executed by the processor, the steps of the resource indication method according to any one of claims 1 to 19 are implemented; or the steps of the resource indication method according to any one of claims 21 to 26 are implemented.

31. A network-side device, comprising a processor and a memory, wherein the memory has stored thereon a program or instruction capable of running on the processor, and when the program or instruction is executed by the processor, the steps of the resource indication method according to claim 20 are implemented.

32. A readable storage medium, wherein the readable storage medium has stored thereon a program or instruction, and when the program or instruction is executed by a processor, the steps of the resource indication method according to any one of claims 1 to 19 are implemented; or the steps of the resource indication method according to claim 20 are implemented; or the steps of the resource indication method according to any one of claims 21 to 26 are implemented.

FIG. 1

A first terminal sends sidelink control information according to a numbering rule of sub-channels and/or resource groups, where the numbering rule of sub-channels and/or resource groups includes a mapping rule between sub-channels and interlaces, the sidelink control information includes resource indication information, and the resource indication information is used to indicate a resource occupied and/or reserved by the first terminal

201

FIG. 2

FIG. 3

FIG. 4

FIG. 5

FIG. 6

A network-side device sends downlink control information to a first terminal according to a numbering rule of sub-channels and/or resource groups, where the numbering rule of sub-channels and/or resource groups includes a mapping rule between sub-channels and interlaces, the downlink control information includes resource indication information, and the resource indication information is used to indicate to the first terminal a resource occupied and/or reserved for transmission

701

The first terminal adds the resource indication information to sidelink control information and sends it to a second terminal

702

FIG. 7

Monitor and/or receive sidelink control information sent by a first terminal and/or downlink control information sent by a network-side device, where the sidelink control information and the downlink control information are generated according to a numbering rule of sub-channels and/or resource groups, the numbering rule of sub-channels and/or resource groups includes a mapping rule between sub-channels and interlaces, the sidelink control information includes resource indication information, and the resource indication information is used to indicate a resource occupied and/or reserved by the first terminal

801

Determine, based on the resource indication information, the resource occupied and/or reserved by the first terminal

802

FIG. 8

FIG. 9A

FIG. 9B

FIG. 9C

FIG. 9D

FIG. 9E

Resource group 1

Resource group 0

Resource indication apparatus                100

First sending module                        1001

FIG. 10

Resource indication apparatus                110

Second sending module                       1101

Third sending module                        1102

FIG. 11

120

Resource indication apparatus

Receiving module 1201

Determining module 1202

FIG. 12

1300

Communication device

1301 Processor ⇔ Memory 1302

FIG. 13

1400

| | | 1410 | | | |
|---|---|---|---|---|---|

```
1401 ─ Radio frequency unit                    Network module  ─ 1402


         ┌─────────────────┐
1409 ─   │    Memory        │
         │ ┌─────────────┐  │              Audio output unit  ─ 1403
         │ │ Application │  │
         │ │  program    │  │                                    1404
         │ ├─────────────┤  │         ┌──────────────────────┐
         │ │ Operating   │  │         │     Input unit         │
         │ │  system     │  │         │ ┌──────────────────┐   │
         │ └─────────────┘  │         │ │    Graphics       │  ─ 14041
         └─────────────────┘          │ │ processing unit   │   │
                                       │ ├──────────────────┤   │
1408 ─     Interface unit              │ │   Microphone      │  ─ 14042
                                       │ └──────────────────┘   │
         1407                          └──────────────────────┘
         ┌─────────────────┐                                   1406
         │  User input unit │         ┌──────────────────────┐
14071 ─  │ ┌─────────────┐  │         │     Display unit        │ ─ 14061
         │ │ Touch panel │  │  Processor │ ┌────────────────┐  │
         │ └─────────────┘  │         │ │  Display panel   │   │
14072 ─  │ ┌─────────────┐  │         │ └────────────────┘   │
         │ │ Other input │  │         └──────────────────────┘
         │ │   devices   │  │
         │ └─────────────┘  │
         └─────────────────┘
                        ┌──────────┐
                        │  Sensor  │ ─ 1405
                        └──────────┘
```

FIG. 14

1500

151

Network-side device

154 Processor

Bus interface

155 Memory

Radio frequency apparatus 152

Baseband apparatus 153

Network interface 156

FIG. 15

1600

Network-side device

1601 Processor

Bus interface

Network interface 1602

1603 Memory

FIG. 16

## INTERNATIONAL SEARCH REPORT

| | International application No. |
|---|---|
| | **PCT/CN2023/122867** |

### A. CLASSIFICATION OF SUBJECT MATTER

H04W72/04(2023.01)i

According to International Patent Classification (IPC) or to both national classification and IPC

### B. FIELDS SEARCHED

Minimum documentation searched (classification system followed by classification symbols)

IPC: H04W,H04Q

Documentation searched other than minimum documentation to the extent that such documents are included in the fields searched

Electronic data base consulted during the international search (name of data base and, where practicable, search terms used)

3GPP, CNTXT, DWPI, ENTXTC, CNKI: 资源, 指示, 子信道, 资源组, 编号规则, 侧链路, 侧行, 副链路, 旁链路, 直连链路, 交错, 交错资源, 控制信息, 映射, 梳齿, 梳尺, resource, spectrum, unlicensed, indicat+, subchannel, interlaced, SCI, DCI, sidelink, SL, map+, control+, rule, group, set

### C. DOCUMENTS CONSIDERED TO BE RELEVANT

| Category* | Citation of document, with indication, where appropriate, of the relevant passages | Relevant to claim No. |
|---|---|---|
| X | CN 114586390 A (BEIJING XIAOMI MOBILE SOFTWARE CO., LTD.) 03 June 2022 (2022-06-03) description, paragraphs [0112]-[0286] | 1-19, 21-27, 29-30, 32 |
| X | CN 114467352 A (BEIJING XIAOMI MOBILE SOFTWARE CO., LTD.) 10 May 2022 (2022-05-10) description, paragraphs [0161]-[0249] and [0305]-[0376] | 20-26, 28-32 |
| X | CN 114938718 A (BEIJING XIAOMI MOBILE SOFTWARE CO., LTD.) 23 August 2022 (2022-08-23) description, paragraphs [0081]-[0179] | 20-26, 28-32 |
| A | WO 2021232382 A1 (GUANGDONG OPPO MOBILE TELECOMMUNICATIONS CORP., LTD.) 25 November 2021 (2021-11-25) entire document | 1-32 |
| A | PANASONIC. "Physical channel design for sidelink on unlicensed spectrum, R1-2203750" *3GPP TSG RAN WG1 #109-e*, 20 May 2022 (2022-05-20), entire document | 1-32 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 November 2023** | **06 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/122867** |

**C.    DOCUMENTS CONSIDERED TO BE RELEVANT**

| Category* | Citation of document, with indication, where appropriate, of the relevant passages | Relevant to claim No. |
|---|---|---|
| A | ROBERT BOSCH GMBH. "Discussion on channel access mechanism for sidelink on unlicensed spectrum, R1-2204868" *3GPP TSG RAN WG1 #109-e,* 20 May 2022 (2022-05-20), entire document | 1-32 |

Form PCT/ISA/210 (second sheet) (July 2022)

**INTERNATIONAL SEARCH REPORT**
Information on patent family members

International application No.

**PCT/CN2023/122867**

| Patent document cited in search report | | | Publication date (day/month/year) | Patent family member(s) | | | Publication date (day/month/year) |
|---|---|---|---|---|---|---|---|
| CN | 114586390 | A | 03 June 2022 | WO | 2023137763 | A1 | 27 July 2023 |
| CN | 114467352 | A | 10 May 2022 | WO | 2023130323 | A1 | 13 July 2023 |
| CN | 114938718 | A | 23 August 2022 | | None | | |
| WO | 2021232382 | A1 | 25 November 2021 | EP | 4156811 | A1 | 29 March 2023 |
| | | | | US | 2023069882 | A1 | 09 March 2023 |
| | | | | CN | 115553005 | A | 30 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310370394
- CN 202211224194